(19)

Europäisches Patentamt

European Patent Office

Office européen des brevets

(11) **EP 4 561 166 A1**

(12) **EUROPEAN PATENT APPLICATION**

published in accordance with Art. 153(4) EPC

(43) Date of publication:
**28.05.2025 Bulletin 2025/22**

(21) Application number: **23851458.2**

(22) Date of filing: **29.06.2023**

(51) International Patent Classification (IPC):
**H04W 28/26** (2009.01)

(52) Cooperative Patent Classification (CPC):
**H04W 28/26**

(86) International application number:
**PCT/CN2023/104302**

(87) International publication number:
**WO 2024/032231 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210972032**

(71) Applicant: **Huawei Technologies Co., Ltd.
Shenzhen, Guangdong 518129 (CN)**

(72) Inventors:
• **ZHANG, Yi
  Shenzhen, Guangdong 518129 (CN)**
• **SU, Hongjia
  Shenzhen, Guangdong 518129 (CN)**
• **LU, Lei
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **RESOURCE RESERVATION METHOD AND APPARATUS, AND STORAGE MEDIUM**

(57)     This application provides a resource reservation method, an apparatus, and a storage medium, applied to the field of communication technologies. The resource reservation method provided in this application includes: A first terminal device receives first indication information from a second terminal device, where the first indication information indicates a first time-frequency resource, and the first time-frequency resource is a resource reserved by the second terminal device. The first terminal device determines, based on one or both of the following, whether to reserve the first time-frequency resource: a first reference signal received power and a quantity of terminal devices that have reserved the first time-frequency resource. According to the method, when reserving a resource, a terminal device may determine, based on the first reference signal received power and/or the quantity of terminal devices that have reserved the first time-frequency resource, whether to repeatedly reserve a time-frequency resource, so that overall utilization of time-frequency resources in a system is improved in a scenario in which resource selection is performed in mode 2.

FIG. 7

**Description**

This application claims priority to Chinese Patent Application No. 202210972032.2, filed with the China National Intellectual Property Administration on August 12, 2022 and entitled "RESOURCE RESERVATION METHOD, APPARATUS, AND STORAGE MEDIUM", which is incorporated herein by reference in its entirety.

**TECHNICAL FIELD**

This application relates to the field of communication technologies, and in particular, to a resource reservation method, an apparatus, and a storage medium.

**BACKGROUND**

In a wireless communication system, bands may be classified into a licensed band and an unlicensed band based on different used bands. In the unlicensed band, a terminal device needs to use a spectrum resource in a contention manner. Specifically, the terminal device needs to contend for a channel in a listen before talk (listen before talk, LBT) manner. For example, before accessing a channel and starting to send data, the terminal device needs to sense whether the channel is idle (idle). If the channel has been kept idle for specific time, the terminal device may occupy the channel. If the channel is not idle, the terminal device may occupy the channel only after the channel is restored to idle again.

In the wireless communication system, terminal devices may communicate with each other through a PC5 interface. A transmission link in the PC5 interface is defined as a sidelink (sidelink, SL). The communication between the terminal devices through the PC5 interface may also be referred to as SL communication.

Currently, two resource allocation modes of the PC5 interface are defined in a 5th generation (5th generation, 5G) mobile communication technology system: mode 1 and mode 2. Mode 2 may also be referred to as a user self-selection resource mode. In this mode, the terminal device does not depend on a base station when using a time-frequency resource, but needs to independently reserve, based on a result of sensing performed by the terminal device in a sensing window, a time-frequency resource from a resource selection window for communication.

However, in the unlicensed band, if different terminal devices perform SL communication in mode 2, there is currently no solution for how the terminal device selects a time-frequency resource to send data. For example, if the terminal device fails to perform LBT, a time-frequency resource that has been reserved by the terminal device cannot be used. In this case, another terminal device also excludes the reserved resource, resulting in a waste of resources.

**SUMMARY**

Embodiments of this application provide a resource reservation method, an apparatus, and a storage medium, to resolve a problem that a waste of resources is caused because a reserved time-frequency resource cannot be used after a terminal device in mode 2 fails to perform LBT on the reserved time-frequency resource in an unlicensed band.

To achieve the foregoing objective, the following technical solutions are used in embodiments of this application.

According to a first aspect, a resource reservation method, an apparatus, and a storage medium are provided. The method may be performed by a first terminal device, may be performed by a component (for example, a processor, a chip, or a chip system) of the first terminal device, or may be implemented by a logical module or software that can implement all or some functions of the first terminal device. An example in which the first terminal device performs the method is used below for description. The method includes: The first terminal device receives first indication information from a second terminal device, where the first indication information indicates a first time-frequency resource, and the first time-frequency resource is a resource reserved by the second terminal device. The first terminal device determines, based on one or both of the following, whether to reserve the first time-frequency resource: a first reference signal received power and a quantity of terminal devices that have reserved the first time-frequency resource, where the first reference signal received power is a reference signal received power of a physical sidelink control channel or a physical sidelink shared channel corresponding to the first indication information.

According to the resource reservation method provided in this embodiment of this application, when reserving a resource, a terminal device may determine, based on the first reference signal received power and/or the quantity of terminal devices that have reserved the first time-frequency resource, whether to repeatedly reserve the first time-frequency resource. In this way, in a scenario in which resource selection is performed in mode 2, this can improve overall utilization of time-frequency resources in a system, and reduce a waste of resources caused because another terminal device cannot use the reserved time-frequency resource either when the terminal device cannot use the reserved time-frequency resource.

With reference to the first aspect, in a possible design, that the first terminal device determines, based on a first reference signal received power, whether to reserve the first time-frequency resource includes: When the first reference signal received power is less than a first power threshold, the first terminal device determines to reserve the first time-frequency resource; or when the first reference signal received power is less than a second power threshold and greater than a third power threshold, the first terminal device determines to reserve the first time-frequency resource.

According to this solution, the first terminal device may determine, based on a value relationship between the first reference signal received power and the first power threshold, the second power threshold, and/or the third power threshold, whether to reserve the first time-frequency resource.

With reference to the first aspect, in a possible design, the first power threshold, the second power threshold, or the third power threshold is determined based on one or more of the following information: a channel busy ratio, a channel occupancy ratio, and a quantity of times that a channel is sensed to be busy. According to this solution, a plurality of methods for determining the first power threshold, the second power threshold, or the third power threshold are provided.

With reference to the first aspect, in a possible design, that the first terminal device determines, based on a quantity of terminal devices that have reserved the first time-frequency resource, whether to reserve the first time-frequency resource includes: When the quantity of terminal devices that have reserved the first time-frequency resource is less than a first threshold, the first terminal device determines to reserve the first time-frequency resource.

According to this solution, the first terminal device may reserve the first time-frequency resource based on the quantity of terminal devices that have reserved the first time-frequency resource, that is, when the quantity of terminal devices that have reserved the first time-frequency resource is less than the first threshold, to avoid a case in which the first terminal device cannot access a same time-frequency resource to send data because too many terminal devices repeatedly reserve the time-frequency resource.

With reference to the first aspect, in a possible design, the first threshold is determined based on one or more of the following information: the channel busy ratio, the channel occupancy ratio, and the quantity of times that a channel is sensed to be busy. According to this solution, a plurality of methods for determining the first threshold are provided.

With reference to the first aspect, in a possible design, the first time-frequency resource is in a resource selection window.

With reference to the first aspect, in a possible design, a start time domain position of the resource selection window is determined based on a first LBT completion time point, where the first LBT completion time point is determined based on a value of an LBT counter. According to this solution, the start time domain position of the resource selection window may be determined based on the LBT completion time point, to ensure that all time-frequency resources in the resource selection window are after the LBT completion time point, and a failure of access to the time-frequency resources due to incompletion of LBT may not occur.

With reference to the first aspect, in a possible design, the method further includes: The first terminal device determines, based on the first LBT completion time point, whether to perform resource reselection, where the first LBT completion time point is determined based on the value of the LBT counter.

With reference to the first aspect, in a possible design, that the first terminal device determines, based on the first LBT completion time point, whether to perform resource reselection includes: When a start time domain position of the first time-frequency resource is before the first LBT completion time point, the first terminal device determines to perform resource reselection and selects a second time-frequency resource, where a start time domain position of the second time-frequency resource is after the first LBT completion time point; or when a start time domain position of the first time-frequency resource is after the first LBT completion time point, the first terminal device determines not to perform resource reselection. According to this solution, resource reselection may be performed when the start time domain position of the first time-frequency resource is before the LBT completion time point, and the second time-frequency resource whose start time domain position is after the LBT completion time point is reselected, to avoid a case in which the first time-frequency resource cannot be accessed to send data because LBT is not completed.

With reference to the first aspect, in a possible design, that the first terminal device selects a second time-frequency resource includes: The first terminal device determines the second time-frequency resource based on one or both of the following: a second reference signal received power and a quantity of terminal devices that have reserved the second time-frequency resource, where the second reference signal received power is a reference signal received power of a physical sidelink control channel or a physical sidelink shared channel corresponding to second indication information. According to this solution, a plurality of manners of selecting the second time-frequency resource are provided.

With reference to the first aspect, in a possible design, when values of LBT counters of the first terminal device and the second terminal device are decremented to 0, and a priority of service data of the first terminal device is higher than a priority of service data of the second terminal device, the method further includes: The first terminal device sends the service data on the first time-frequency resource. According to this solution, when a plurality of terminal devices repeatedly reserve a same time-frequency resource and all successfully perform LBT, a terminal device with a high service priority can access the first time-frequency resource to send data, to avoid a conflict caused because the plurality of terminal devices access the same resource to send data.

With reference to the first aspect, in a possible design, the first indication information is carried in at least one of the following information: first-stage sidelink control information, second-stage sidelink control information, a sidelink media access control control element, or PC5 radio resource control signaling. According to this solution, a plurality of types of information that can carry the first indication information are provided.

According to a second aspect, a resource reservation method, an apparatus, and a storage medium are provided. The method may be performed by a first terminal device, may be performed by a component (for example, a processor, a chip, or a chip system) of the first terminal device, or may be implemented by a logical module or software that can implement all or some functions of the first terminal device. An example in which the first terminal device performs the method is used below for description. The method includes: The first terminal device determines a first LBT completion time point based on a value of a listen before talk LBT counter N. Based on the first LBT completion time point, the first terminal device reserves a first time-frequency resource in a resource selection window, and/or determines whether to perform resource reselection.

According to the resource reservation method provided in this embodiment of this application, a terminal device may reserve a time-frequency resource based on an LBT completion time point, to avoid a case in which the reserved time-frequency resource cannot be used because LBT is not completed. Alternatively, a terminal device may determine, based on an LBT completion time point, whether to perform resource reselection, and when a reserved time-frequency resource cannot be used because LBT is not completed, may use a reselected resource to send data.

With reference to the second aspect, in a possible design, that the first terminal device reserves, based on the first LBT completion time point, a first time-frequency resource in a resource selection window includes: The first terminal device reserves, in the resource selection window, the first time-frequency resource whose start time domain position is after the first LBT completion time point. According to this solution, during resource reservation, the first time-frequency resource whose start time domain position is after the LBT completion time point can be reserved, to avoid a case in which the first time-frequency resource cannot be used to send data because LBT is not completed.

With reference to the second aspect, in a possible design, that the first terminal device determines, based on the LBT completion time point, whether to perform resource reselection includes: When a start time domain position of the first time-frequency resource is before the LBT completion time point, the first terminal device determines to perform resource reselection and selects a second time-frequency resource, where a start time domain position of the second time-frequency resource is after the first LBT completion time point. According to this solution, resource reselection may be performed when the start time domain position of the first time-frequency resource is before the LBT completion time point, and the second time-frequency resource whose start time domain position is after the LBT completion time point is reselected. In this way, when the first time-frequency resource cannot be used because LBT is not completed, the second time-frequency resource may be used to send data.

With reference to the second aspect, in a possible design, the first terminal device determines the second time-frequency resource based on one or both of the following: a second reference signal received power and a quantity of terminal devices that have reserved the second time-frequency resource, where the second reference signal received power is a reference signal received power of a physical sidelink control channel or a physical sidelink shared channel corresponding to second indication information. According to this solution, a plurality of manners of selecting the second time-frequency resource are provided.

With reference to the second aspect, in a possible design, that the first terminal device selects a second time-frequency resource includes: The first terminal device selects the second time-frequency resource when the quantity of terminal devices that have reserved the second time-frequency resource is less than a first threshold. According to this solution, the first terminal device may select the second time-frequency resource when the quantity of terminal devices that have reserved the second time-frequency resource is less than the first threshold, to avoid a case in which the first terminal device cannot access the second time-frequency resource to send data because too many terminal devices repeatedly reserve the second time-frequency resource.

With reference to the second aspect, in a possible design, the first threshold is determined based on one or more of the following information: a channel busy ratio, a channel occupancy ratio, and a quantity of times that a channel is sensed to be busy. According to this solution, a plurality of methods for determining the first threshold are provided.

With reference to the second aspect, in a possible design, that the first terminal device selects a second time-frequency resource includes: When the second time-frequency resource is reserved by a second terminal device, and the second reference signal received power is less than a first power threshold, or when the second time-frequency resource is reserved by a second terminal device, and the second reference signal received power is less than a second power threshold and greater than a third power threshold, the first terminal device selects the second time-frequency resource. According to this solution, the first terminal device may determine, based on a value relationship between the second reference signal received power and the first power threshold, the second power threshold, and/or the third power threshold, whether to select the second time-frequency resource.

With reference to the second aspect, in a possible design, the first power threshold, the second power threshold, or the third power threshold is determined based on one or more of the following information: a channel busy ratio, a channel occupancy ratio, and a quantity of times that a channel is sensed to be busy. According to this solution, a plurality of methods for determining the first power threshold, the second power threshold, or the third power threshold are provided.

With reference to the second aspect, in a possible design, that the first terminal device selects a second time-frequency resource includes: The first terminal device selects the second time-frequency resource when the second time-frequency resource is reserved by a second terminal device and the second reference signal received power is less than a second threshold. According to this solution, the first terminal device may determine, based on a value relationship between the second reference signal received power and the second threshold, whether to select the second time-frequency resource.

With reference to the second aspect, in a possible design, the second threshold is determined based on a priority indicated by the second indication information and a priority of to-be-sent data of the first terminal device, where the second indication information indicates the second time-frequency resource. According to this solution, a method for determining the second threshold is provided.

According to a third aspect, a communication apparatus is provided, to implement the foregoing methods. The communication apparatus may be the first terminal device in the first aspect or the second aspect, may be an apparatus including the first terminal device, or may be an apparatus included in the first terminal device, for example, a chip.

The communication apparatus includes a corresponding module, unit, or means (means) for implementing the foregoing method. The module, unit, or means may be implemented by hardware, software, or may be implemented by hardware executing corresponding software. The hardware or the software includes one or more modules or units corresponding to the foregoing function.

According to a fourth aspect, a communication apparatus is provided, and includes a processor. The processor is configured to execute instructions stored in a memory, and when the processor executes the instructions, the communication apparatus is enabled to perform the method according to any one of the foregoing aspects. The communication apparatus may be the first terminal device in the first aspect or the second aspect, may be an apparatus including the first terminal device, or may be an apparatus included in the first terminal device, for example, a chip.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is outside the communication apparatus.

According to a fifth aspect, a communication apparatus is provided, and includes a processor and an interface circuit. The interface circuit is configured to communicate with a module outside the communication apparatus; and the processor is configured to perform the method according to any one of the foregoing aspects via a logic circuit or by running a computer program or instructions. The communication apparatus may be the first terminal device in the first aspect or the second aspect, may be an apparatus including the first terminal device, or may be an apparatus included in the first terminal device, for example, a chip.

Alternatively, the interface circuit may be a code/data read/write interface circuit, and the interface circuit is configured to receive computer-executable instructions (where the computer-executable instructions are stored in a memory, and may be read from the memory directly or through another component) and transmit the computer-executable instructions to the processor, to enable the processor to run the computer-executable instructions to perform the method according to any one of the foregoing aspects.

In some possible designs, the communication apparatus may be a chip or a chip system.

According to a sixth aspect, a computer-readable storage medium is provided. The computer-readable storage medium stores instructions. When the instructions are run on a communication apparatus, the communication apparatus is enabled to perform the method according to any one of the foregoing aspects. The communication apparatus may be the first terminal device in the first aspect or the second aspect, may be an apparatus including the first terminal device, or may be an apparatus included in the first terminal device, for example, a chip.

According to a seventh aspect, a computer program product including instructions is provided. When the computer program product runs on a communication apparatus, the communication apparatus is enabled to perform the method according to any one of the foregoing aspects. The communication apparatus may be the first terminal device in the first aspect or the second aspect, may be an apparatus including the first terminal device, or may be an apparatus included in the first terminal device, for example, a chip.

According to an eighth aspect, a communication apparatus (for example, the communication apparatus may be a chip or a chip system) is provided. The communication apparatus includes a processor, configured to implement the function in any one of the foregoing aspects. In a possible design, the communication apparatus further includes a memory, and the memory is configured to store necessary program instructions and data. When being a chip system, the communication apparatus may include a chip, or may include the chip and another discrete component.

For technical effects brought by any design in the third aspect to the eighth aspect, refer to the technical effects brought by different designs in the first aspect and the second aspect. Details are not described herein again.

## BRIEF DESCRIPTION OF DRAWINGS

FIG. 1 is a diagram of LBT according to an embodiment of this application;

FIG. 2 is a diagram of interlaced resources according to an embodiment of this application;

FIG. 3 is another diagram of interlaced resources according to an embodiment of this application;

FIG. 4 is a diagram of resource selection according to an embodiment of this application;

FIG. 5 is a diagram of an architecture of a communication system according to an embodiment of this application;

FIG. 6 is a diagram of a structure of a communication apparatus according to an embodiment of this application;

FIG. 7 is an interaction diagram of a resource reservation method according to an embodiment of this application;

FIG. 8 is a diagram of a resource selection window according to an embodiment of this application;

FIG. 9 is a schematic flowchart of a resource reservation method according to an embodiment of this application;

FIG. 10 is a diagram of reselecting a second time-frequency resource according to an embodiment of this application;

FIG. 11 is another diagram of reselecting a second time-frequency resource according to an embodiment of this application;

FIG. 12 is a diagram of resource reservation according to an embodiment of this application;

FIG. 13 is a diagram of reserving a plurality of time-frequency resources according to an embodiment of this application;

FIG. 14 is another diagram of reserving a plurality of time-frequency resources according to an embodiment of this application;

FIG. 15 is a diagram of a structure of a communication apparatus according to an embodiment of this application; and

FIG. 16 is a diagram of a structure of another communication apparatus according to an embodiment of this application.

## DESCRIPTION OF EMBODIMENTS

For ease of understanding of the technical solutions in embodiments of this application, technologies related to this application are first briefly described as follows:

1. LBT

In a wireless communication system, used bands may be classified into licensed bands and unlicensed bands. In an unlicensed band, a device (a network device or a terminal device) needs to contend for a channel in a listen before talk LBT manner. Specifically, before accessing a channel and starting to send data, the device needs to sense whether the channel is idle (idle). If the channel has been kept idle for specific time, the terminal device may occupy the channel. If the channel is not idle, the terminal device may occupy the channel only after the channel is restored to idle again. In a new radio (new radio, NR) protocol for the unlicensed band, a device may use the following type of LBT to access a channel: Type 1 LBT, Type 2A LBT, Type 2B LBT, or Type 2C LBT. These types of LBT are described below.

Type 1 LBT: A device needs to perform random backoff to access a channel and send data.

A basic procedure of Type 1 LBT includes the following steps. After sensing, for the first time, that a channel is idle within a defer duration (defer duration) (denoted as $T_d$), the device may initiate transmission after a value of a counter N in the following steps is zero. Adjustment on the counter is determined based on a result of sensing by the device in a sensing slot duration, namely, $T_{sl}$ in the following steps.

Step 1: Set $N = N_{init}$, where $N_{init}$ is a random number uniformly distributed between 0 and $CW_p$, and perform step 4.

Step 2: If $N > 0$, and the network device or the terminal device chooses to decrement the counter, $N = N - 1$.

Step 3: Sense the channel to obtain an additional sensing slot duration $T_{sl}$, and if the channel in the additional sensing slot duration is idle, perform step 4; or if the channel in the additional sensing slot duration is busy, perform step 5.

Step 4: If $N = 0$, end the procedure; or if N is not equal to 0, perform step 2.

Step 5: Sense the channel, until it is sensed that the channel is busy in another duration $T_d$ or it is sensed that the channel is detected to be idle in all sensing slots in another duration $T_d$.

Step 6: If the channel is detected to be idle in all the sensing slots in the another duration $T_d$, perform step 4; or if the channel is detected to be busy in all the sensing slots in the another duration $T_d$, perform step 5.

In this embodiment of this application, the counter N used in the LBT procedure in step 1 to step 6 may be referred to as an LBT counter.

In step 1 to step 6, $T_d$ includes a duration $T_f = 16$ $\mu$s and $m_p$ consecutive sensing slot durations (denoted as $T_{sl}$) following the duration, and $T_f$ includes one idle sensing slot duration at the beginning of $T_f$. A basic unit for the device to sense the channel is a sensing slot

duration $T_{sl}$ = 9 μs. If the device senses the channel in the sensing slot duration $T_{sl}$, and determines that a detection power in at least 4 μs is less than an energy detection threshold, it is considered that the channel is idle in the sensing slot duration. Alternatively, if it is determined that a detection power in at least 4 μs is greater than or equal to an energy detection threshold, it is considered that the channel is busy in the sensing slot duration.

In step 1 to step 6, $m_p$, $CW_{min, p}$, and $CW_{max, p}$ are determined based on a channel access priority level p associated with data transmission of the device. Specifically, the device maintains a mapping relationship between p and $m_p$ and a mapping relationship between $CW_{min,p}$ and $CW_{max,p}$, to determine $m_p$, $CW_{min,p}$, and $CW_{max,p}$ based on p configured by a higher layer, and perform LBT.

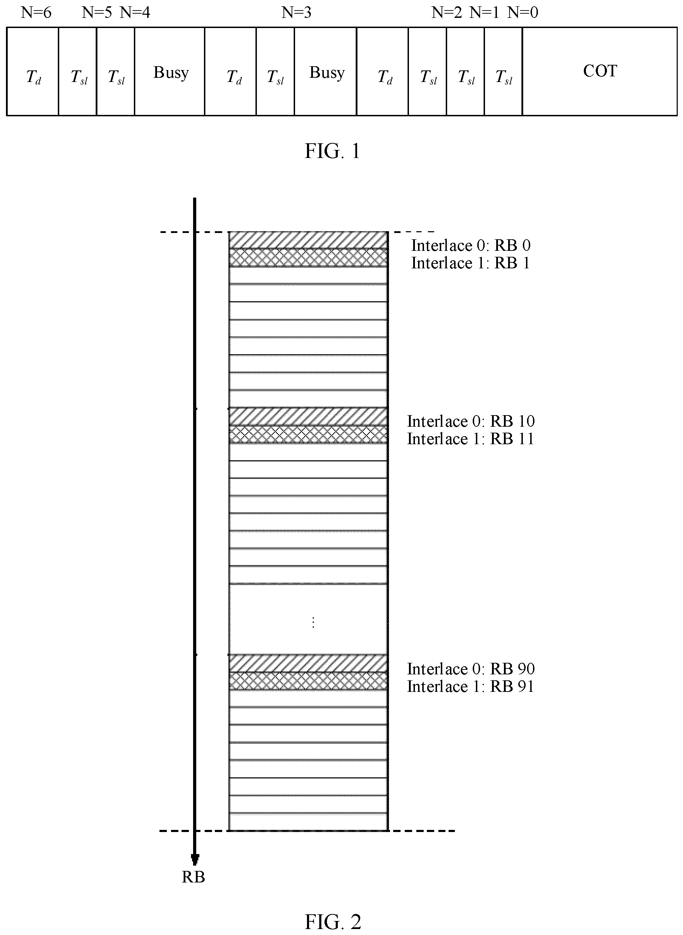

For example, FIG. 1 is a diagram in which a device performs Type 1 LBT, to sense a channel until the device accesses the channel in a possible case. As shown in FIG. 1, a value of a decremented counter N set by the device is equal to 6. If the device senses, in a 1st duration $T_d$, that the channel is idle, the device continues to sense the channel in a 1st duration $T_{sl}$. If the device senses, in the 1st duration $T_{sl}$, that the channel is idle, N is equal to 5 at an end moment of the 1st duration $T_{sl}$. The device continues to sense the channel in a 2nd duration $T_{sl}$, and if the device senses, in the 2nd duration $T_{sl}$, that the channel is idle, N is equal to 4 at an end moment of the 2nd duration $T_{sl}$. Then, if the device senses that the channel is busy, the device continuously senses the channel until the device senses, in a 2nd duration $T_d$, that the channel is idle. The device continues to sense the channel in a 3rd duration $T_{sl}$, and if the device senses, in the 3rd duration $T_{sl}$, that the channel is idle, N is equal to 3 at an end moment of the 3rd duration $T_{sl}$. Then, if the device senses that the channel is busy, the device continuously senses the channel until the device senses, in a 3rd duration $T_d$, that the channel is idle. The device continues to sense the channel in a 4th duration $T_{sl}$, and if the device senses, in the 4th duration $T_{sl}$, that the channel is idle, N is equal to 2 at an end moment of the 4th duration $T_{sl}$. The device continues to sense the channel in a 5th duration $T_{sl}$, and if the device senses, in the 5th duration $T_{sl}$, that the channel is idle, N is equal to 1 at an end moment of the 5th duration $T_{sl}$. The device continues to sense the channel in a 6th duration $T_{sl}$, and if the device senses, in the 6th duration $T_{sl}$, that the channel is idle, N is equal to 0 at an end moment of the 6th duration $T_{sl}$. After the end of the 6th duration $T_{sl}$, that is, after N=0, the device accesses the channel and perform data transmission within channel occupancy time (channel occupancy time, COT).

Type 2A LBT: After sensing that a channel is idle for 25 μs, a device can access a channel and send data.

Type 2B LBT: After sensing that a channel is idle for 16 μs, a device can access a channel and send data.

Type 2C LBT: A device does not need to sense a channel, and after a transition interval of up to 16 μs within COT, the device can directly access the channel and send data. The COT refers to time in which the device is allowed to occupy a channel after successfully accessing the channel. Specifically, if the device has accessed a channel and sent data, and an interval between previous data transmission and next data transmission is less than 16 μs, the device does not need to sense the channel after the previous data transmission ends, and may immediately perform transmission during the next data transmission.

In addition, currently, for the unlicensed band, there is a specific requirement on an occupied channel bandwidth (occupied channel bandwidth, OCB) corresponding to a channel in each region, and it is generally specified that the OCB is at least 80% of a normal bandwidth. For example, if a channel has a bandwidth of 20 MHz, the device can occupy the channel of 20 MHz only after occupying at least a bandwidth of 16 MHz. Therefore, to ensure the requirement on the OCB, a concept of an interlaced resource block (interlaced resource block, interlaced RB) is introduced into an NR system, and that an interlaced (interlaced) resource m (also referred to as a resource on an interlace m) includes {m, M + m, 2M + m, 3M + m, ... } RBs is defined, where m ∈ {0,1, ..., M-1}. As shown in FIG. 2, a channel whose subcarrier spacing (subcarrier spacing, SCS) is 15 kHz includes resources on 10 interlaces (interlace 0 to interlace 9). A device 1 may use resources on the interlace 0 (interlace 0), including {RB 0, RB 10, ..., RB 90}, and a device 2 may use resources on the interlace 1 (interlace 1), including {RB 1, RB 11, ..., RB 91}. A case in which another device uses interlaced resources is deduced by analogy.

It should be noted that in embodiments of this application, the interlace and a sub-channel may be interchangeably used.

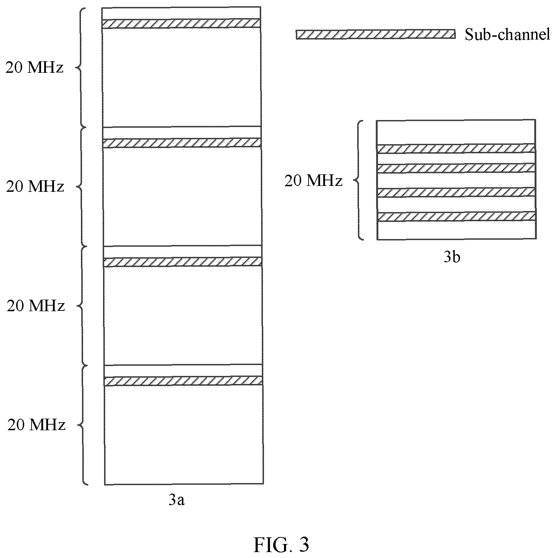

Currently, there are two resource allocation manners for the device to use a plurality of interlaced resources. As shown in FIG. 3, assuming that a bandwidth of each channel is 20 MHz, both 3a and 3b in FIG. 3 may be used to indicate that the device uses four interlaced resources (sub-channels). 3a indicates that the device uses one interlaced resource in each of the four channels, and 3b indicates that the device uses four interlaced resources in one channel.

Optionally, after the device performs LBT on a channel, to avoid interference between different channels, the device does not send data on an entire bandwidth occupied by the channel, but reserves a part of a frequency domain resource as a guard band (guard band), and sends data on the remaining frequency domain resource. The available resource used to send data may be referred to as a resource block set (RB set).

It should be noted that in embodiments of this application, the channel and the RB set may be interchangeably used.

2. Mode 2 in SL communication

In a wireless communication system, terminal devices may communicate with each other through a PC5 interface. A transmission link in the PC5 interface is defined as an SL. Therefore, the communication between the terminal devices through the PC5 interface may also be referred to as SL communication.

Currently, two resource allocation modes of the PC5 interface are defined in an NR system: mode 1 and mode 2. In mode 1, a base station allocates a time-frequency resource to the terminal device. Mode 2 may be referred to as a user self-selection resource mode. In this mode, the terminal device does not depend on a base station when using a time-frequency resource, but needs to select a resource from a resource selection window based on a result of sensing performed by the terminal device in a sensing window, and reserve (reserve) the resource; or reserve a time-frequency resource, to select the reserved time-frequency resource to perform SL communication, and perform data transmission.

The following describes a specific implementation in which the terminal device selects a time-frequency resource in mode 2.

Before performing resource selection, the terminal device needs to obtain SL resource pool configuration information, where the SL resource pool configuration information may indicate an SL resource pool. The SL resource pool is a set of time-frequency resources, and the time-frequency resources may be used for SL communication between terminal devices.

It is assumed that the terminal device triggers resource selection in a slot n. A specific resource selection procedure includes the following steps:

Step 1: Determine a resource selection window [$n + T_1$, $n + T_2$]. $T_1$ is implemented by a user, and satisfies that $0 \le T_1 \le T_{proc,1}^{SL}$, where $T_{proc,1}^{SL}$ is determined based on related configuration information. For $T_2$, $T_{2min}$ is configured by using a higher layer parameter of the terminal device, if $T_{2min}$ is less than a remaining packet delay budget (packet delay budget, PDB), $T_2$ satisfies that $T_{2min} \le T_2 \le$ the remaining PDB; or if $T_{2min} \le T_2 \le$ the remaining PDB is not satisfied, $T_2$ is equal to the remaining PDB. A time domain resource of the resource selection window is in a time domain resource of the SL resource pool, and a frequency domain resource of the resource selection window is the same as a frequency domain resource of the SL resource pool.

Step 2: Determine a sensing window $[n - T_0, n - T_{proc,0}^{SL})$. $T_0$ and $T_{proc,0}^{SL}$ are determined based on related configuration information.

Step 3: Determine a reference signal received power (reference signal received power, RSRP) threshold, where the RSRP threshold is related to a priority $prio_{TX}$ of to-be-sent data and a priority $prio_{TX}$ indicated by received sidelink control information (sidelink control information, SCI).

Step 4: Initialize a resource set $S_A$ to include all time-frequency resources in the resource selection window, where the time-frequency resources in the resource selection window are in a unit of one slot in time domain, and are in a unit of $L_{subCH}$ consecutive sub-channels in frequency domain.

Step 5: Exclude the following time-frequency resource from $S_A$: a time-frequency resource that is in the resource selection window and that corresponds to a slot in which no sensing is performed in the sensing window.

Step 5a: If in step 5, time-frequency resources excluded from $S_A$ are less than X% of total resources included in the resource selection window, perform step 4 again to initialize $S_A$. A value of X is configured by using the SL resource pool configuration information.

Step 6: Continue to exclude the following time-frequency resource from $S_A$: received first-stage SCI that is successfully decoded, where a time-frequency resource reserved by the received first-stage SCI is in the resource selection window, and an RSRP measurement result of a demodulation reference signal (demodulation reference signal, DMRS) of a physical sidelink shared channel (physical sidelink shared channel, PSSCH) or a physical sidelink control channel (physical sidelink control channel, PSCCH) corresponding to the received first-stage SCI is greater than the corresponding RSRP threshold determined in step 3.

For example, if a terminal device 1 receives first-stage SCI from a terminal device 2, and the first-stage SCI indicates that a time-frequency domain position of a time-frequency resource 1 is in the resource selection window, the terminal device may determine, based on the first-stage SCI, that the terminal device 2 has reserved the time-frequency resource 1, and determine, based on $prio_{TX}$ of to-be-sent data of the terminal device 1 and a priority $prio_{TX}$ indicated by the first-stage SCI, an RSRP threshold corresponding to the time-frequency resource 1. The terminal device 1 performs RSRP measurement on a DMRS of a PSSCH of the time-frequency resource 1. If an obtained RSRP measurement result is greater than the RSRP threshold corresponding to the time-frequency resource 1, the terminal device excludes the time-frequency resource 1 from $S_A$.

Step 7: If a quantity of remaining candidate resources in $S_A$ is less than X% of the total resources included in the resource selection window, increase the RSRP threshold determined in step 3 (increase by 3 dB each time) and perform the resource initialization process in step 4. In this case, the remaining candidate resource in $S_A$ may be referred to as an available resource in the resource selection window.

The terminal device reports $S_A$ to a media access control (media access control element, MAC) layer. The MAC layer randomly selects a time-frequency resource from $S_A$ for sending data. The terminal device sends the first-stage SCI to another terminal device, to indicate a time-frequency domain position of a selected time-frequency resource, so that the another terminal device determines that the time-frequency resource has been reserved. The time-frequency resource indicated by the first-stage SCI sent by the terminal device may also be referred to as a time-frequency resource reserved by the terminal device.

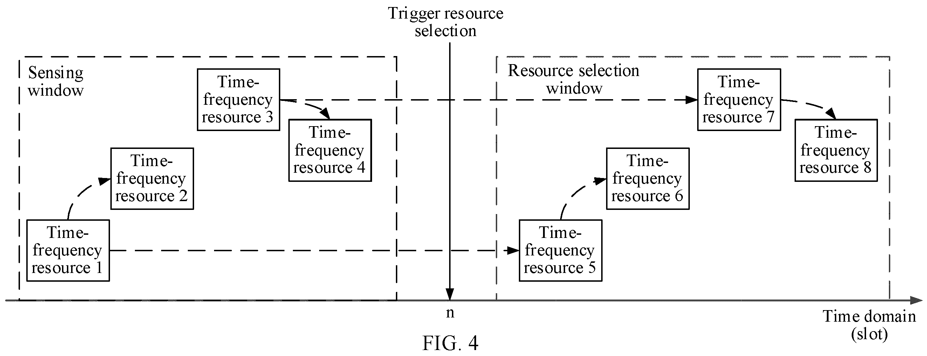

For example, FIG. 4 is a diagram in which the terminal device excludes a time-frequency resource in the resource selection window based on a result of sensing in the sensing window in a possible case. As shown in FIG. 4, the terminal device separately receives two different pieces of first-stage SCI on a time-frequency resource 1 and a time-frequency resource 3 in the sensing window, where the first-stage SCI received on the time-frequency resource 1 indicates a time-frequency resource 2, a time-frequency resource 5, and a time-frequency resource 6, and the first-stage SCI received on the time-frequency resource 3 indicates a time-frequency resource 4, a time-frequency resource 7, and a time-frequency resource 8. The terminal device triggers resource selection in the slot n, and the terminal device determines, based on the two pieces of first-stage SCI, that the time-frequency resource 2 and the time-frequency resource 4 are not in the resource selection window, and the time-frequency resource 5, the time-frequency resource 6, the time-frequency resource 7, and the time-frequency resource 8 are in the resource selection window and have been reserved by another terminal device. The terminal device determines, based on $prio_{TX}$ of the to-be-sent data of the terminal device and priorities respectively indicated by the two pieces of first-stage SCI, RSRP thresholds respectively corresponding to the time-frequency resource 5, the time-frequency resource 6, the time-frequency resource 7, and the time-frequency resource 8. The terminal device separately measures DMRSs of PSSCHs corresponding to the two pieces of received first-stage SCI, and obtained RSRPs are greater than the corresponding RSRP thresholds, and in this case, the terminal device excludes the time-frequency resource 5, the time-frequency resource 6, the time-frequency resource 7, and the time-frequency resource 8 in the resource selection window.

Optionally, before sending data on the selected time-frequency resource, the terminal device may re-evaluate a selected time-frequency resource pair. If the time-frequency resource is excluded during the re-evaluation, the terminal device may reselect a time-frequency resource. Specifically, the terminal device performs step 1 to step 7 in the foregoing resource selection procedure again, and determines whether the selected time-frequency resource is to be excluded. If the selected time-frequency resource is to be excluded in the procedure performed again, the terminal device needs to reselect a time-frequency resource. It is assumed that a slot in which the selected time-frequency resource is located is a slot m. The terminal device may trigger resource re-evaluation before and after a moment, namely, slot m-T3, where $T_3 = T_{proc,1}^{SL}$, and $T_{proc,1}^{SL}$ is determined based on SL bandwidth part (bandwidth part, BWP) configuration information.

In addition, in mode 2, the terminal device may select a resource and reserve the resource in a dynamic scheduling manner or a semi-persistent scheduling (semi-persistent scheme, SPS) manner. In the dynamic scheduling manner, a resource can be selected for a single transport block (transport block, TB), and a resource can be reserved for retransmission of a same TB. In the SPS manner, resources can be selected for a plurality of TBs, and resources can be reserved for retransmission of the plurality of TBs. The reserved resource may be periodic or may be aperiodic. When the reserved resource is periodic, reserved resources in different periodicities are used to transmit different TBs. When the reserved resource is aperiodic, that the reserved resource is used to transmit a same TB may be understood as reserving a retransmission resource for the same TB.

3. Multichannel access

In an unlicensed band, a device may access a channel by performing Type 1 LBT or Type 2 LBT described above, to implement multichannel access. The following describes different types of multichannel access procedures.

(1) Type A multichannel access procedure

The device may perform, based on a Type 1 LBT procedure, a channel access procedure on each channel $c_i \in C$, where $C$ represents a channel set on which the device is to perform transmission. A counter of the channel $c_i$ is denoted as $N_{c_i}$, $i = 0,1, ..., q$, and $q$ represents a total quantity of channels.

Type A1 multichannel access procedure: A counter of each channel $c_i$ is determined independently, and is denoted as $N_{c_i}$. When the device accesses a channel $c_j \in C$, the device stops sensing the other channels in $C$. When the device stops transmission on the channel $c_j$, for another channel $c_i \neq c_j$, after the device waits for $4 * T_{sl}$, if the device senses again, in $T_d$, that the channel is in an idle state, the device may continue to decrement $N_{c_i}$, or the device may re-initialize $N_{c_i}$.

Type A2 multichannel access procedure: A counter of a channel $c_j \in C$ is recorded as $N_{c_j}$, where $c_j$ represents a channel with a maximum $CW_p$ value. For another channel $c_i$, $N_{c_i} = N_{c_j}$ is satisfied, that is, initial values of counters of all channels are the same. When the device accesses the channel $c_j \in C$, the device stops sensing the other channels in $C$. When the device stops transmission on any channel $c_i \in C$, the device re-initializes counters $N_{c_i}$ of all the channels.

(2) Type B multichannel access procedure

The device selects a channel $c_j \in C$ in the following manner: The device selects a channel $c_j$ from a set $C$ before performing transmission on each channel $c_i \in C$. When the channel $c_j$ is not randomly selected, the device selects the channel $c_j$ at a frequency not more than once per second, where $C$ represents a channel set on which the device is to perform transmission, $i = 0, 1, ..., q$, and $q$ represents a total quantity of channels.

Channel $c_j$ access: The device may access the channel $c_j$ based on an existing Type 1 LBT procedure.

Channel $c_i \neq c_j (c_i \in C)$ access: For each channel $c_j$, the device needs to sense the channel $c_i$ for at least $T_{mc} = 25 \ \mu s$ before accessing the channel $c_j$. After the device senses $c_i$ for at least $T_{mc}$ and a result is idle, the device may send data on the channel $c_i$. In other words, time during which the device senses the channel $c_i$ is at least $T_{mc}$ before the device accesses the channel $c_j$. If a result of sensing the channel $c_i$ in the time period $T_{mc}$ is always idle, it is considered that the channel $c_i$ is idle.

Type B1 multichannel access procedure: Maintain $CW_p$ for the channel set $C$.

Type B2 multichannel access procedure: A $CW_p$ value is independently configured for each channel $c_i \in C$. A counter $N_{init}$ of the channel $c_j$ is determined based on a $CW_p$ value of a channel $c_{j1} \in C$, where $c_{j1}$ represents a channel with a maximum $CW_p$ value in the channel set $C$.

It can be learned from the foregoing descriptions that, in the unlicensed band, the device needs to perform LBT to access a channel to perform data transmission. However, during SL communication, if the terminal device uses mode 2, the terminal device needs to reserve time-frequency resources in the resource selection window to select a time-frequency resource for data transmission. However, in a scenario in which the terminal device performs SL communication in mode 2 in the unlicensed band, there is currently no solution for how the terminal device selects a time-frequency resource to send data. For example, after reserving a time-frequency resource in the resource selection window, the terminal device performs LBT on a channel corresponding to the time-frequency resource. If the terminal device has not completed LBT at a start time domain position of the time-frequency resource reserved by the terminal device, the time-frequency resource reserved by the terminal device cannot be used. In this case, another terminal device has excluded the reserved resource, resulting in a waste of resources.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the conventional technology may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the conventional technology may know that with evolution of the network architecture and emergence of a new service scenario, the technical solutions provided in embodiments of this application are also applicable to similar technical problems.

A resource reservation method provided in embodiments of this application is applicable to various communication systems. For example, a resource reservation method provided in embodiments of this application may be applied to a long term evolution (long term evolution, LTE) system, a 5G system, or a system in which terminal devices can directly communicate with each other, for example, a device-to-device (device-to-device, D2D) or vehicle-to-everything (vehicle-to-everything, V2X) system, or another future-oriented new communication system, for example, a 6th generation (6th generation, 6G) system. This is not specifically limited in embodiments of this application.

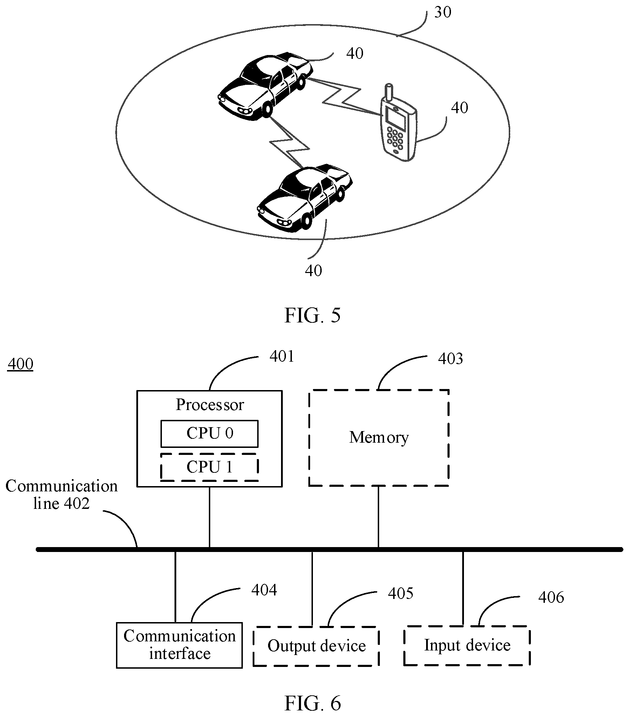

FIG. 5 shows a communication system 30 according to an embodiment of this application. The communication system 30 includes a plurality of terminal devices 40. Different terminal devices 40 may communicate with each other. The terminal device 40 may be located at a fixed position, or may be mobile.

It should be noted that FIG. 5 is merely a diagram, and that the communication system 30 includes three terminal devices 40 is not limited in this embodiment of this application. In addition, although not shown in the figure, the communication system 30 may further include another device. For example, the communication system 30 may further include a network device, and the terminal device 40 may be within coverage of the network device, or may be outside coverage of the network device. This is not specifically limited herein.

For example, the different terminal devices 40 shown in FIG. 5 interact with each other. In the resource reservation method provided in embodiments of this application, specific implementations and technical effects of the solution are described in detail in subsequent method embodiments. Details are not described herein.

Optionally, the network device in embodiments of this application is a device that connects the terminal device to a wireless network. The network device in embodiments of this application may include base stations (base station) in various forms, for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, a device that undertakes a base station function in device-to-device (Device-to-Device, D2D), vehicle-to-everything (vehicle-to-everything, V2X), or machine-to-machine (machine-to-machine, M2M) communication, or the like; may be a network device in an NTN communication system, that is, may be deployed on a high-altitude platform or a satellite; or may be a module or a unit that completes some functions of a base station, for example, may be a central unit (central unit, CU) in a cloud access network (cloud radio access network, C-RAN) system, or may be a distributed unit (distributed unit, DU). A specific technology and a specific device form that are used by the network device are not limited in embodiments of this application. All or some functions of the network device in this application may alternatively be implemented by using a software function running on hardware, or may be implemented by using a virtualization function instantiated on a platform (for example, a cloud platform). In this application, unless otherwise specified, the network device is a radio access network device.

Optionally, the terminal device in embodiments of this application may be a device having a wireless transceiver function, or may be referred to as a terminal (terminal). The terminal device may be specifically a user equipment (user equipment, UE), an access terminal, a subscriber unit (subscriber unit), a subscriber station, a mobile station (mobile station), a customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, a personal digital processing (personal digital assistant, PDA), a handheld device with a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS) machine, a machine type communication device, a terminal device in D2D, a terminal device in V2X, a terminal device in virtual reality (virtual reality, VR), a terminal device in augmented reality (augmented reality, AR), a wireless terminal in industrial control (industrial control), a wireless terminal in self driving (self driving), a wireless terminal in remote medical (remote medical), a wireless terminal in smart grid (smart grid), a wireless terminal in transportation security (transportation safety), a wireless terminal in a smart city (smart city), a wireless terminal in a smart home (smart home), a terminal device in a future communication network, or the like. A specific technology and a specific device form that are used by the terminal device are not limited in embodiments of this application. All or some functions of the terminal device in this application may alternatively be implemented by using a software function running on hardware, or may be implemented by using a virtualization function instantiated on a platform (for example, a cloud platform).

Optionally, in embodiments of this application, the network device or the terminal device may be deployed on the land, including an indoor device, an outdoor device, a handheld device, or a vehicle-mounted device; may be deployed on the water; or may be deployed on an airplane, a balloon, and a satellite in the air. Application scenarios of the network device or the terminal device are not limited in embodiments of this application.

Optionally, the network device or the terminal device in this embodiment of this application may also be referred to as a communication apparatus, and may be a general-purpose device or a dedicated device. This is not specifically limited in this embodiment of this application.

Optionally, a related function of the terminal device in this embodiment of this application may be implemented by one device, or may be jointly implemented by a plurality of devices, or may be implemented by one or more functional modules in one device. This is not specifically limited in this embodiment of this application. It may be understood that the foregoing function may be a network element in a hardware device, a software function running on dedicated hardware, a combination of hardware and software, or a virtualization function instantiated on a platform (for example, a cloud platform).

For example, related functions of the terminal device in this embodiment of this application may be implemented by a communication device 400 in FIG. 6. FIG. 6 is a diagram of a structure of a communication device 400 according to an embodiment of this application. The communication device 400 includes one or more processors 401, a communication line 402, and at least one communication interface (in FIG. 6, an example in which the communication device 400 includes a communication interface 404 and one processor 401 is merely used for description), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for connecting different components.

The communication interface 404 may be a transceiver module configured to communicate with another device or a communication network, such as an Ethernet, a RAN, or a wireless local area network (wireless local area network, WLAN). For example, the transceiver module may be an apparatus such as a transceiver or a transceiver machine. Optionally, the communication interface 404 may alternatively be a transceiver circuit located in the processor 401, configured to implement signal input and signal output of the processor.

The memory 403 may be an apparatus having a storage function. For example, the memory 403 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction or data structure form and that can be accessed by a computer, but is not limited thereto. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement the resource reservation method provided in embodiments of this application.

Alternatively, optionally, in this embodiment of this application, the processor 401 may perform functions related to processing in the resource reservation method provided in the following embodiments of this application. The communication interface 404 is responsible for communicating with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the processor 401 may include one or more CPUs, for example, a CPU 0 and a CPU 1 in FIG. 6.

During specific implementation, in an embodiment, the communication device 400 may include a plurality of processors. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

In a specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

The communication device 400 may also be referred to as a communication apparatus sometimes, and may be a general-purpose device or a dedicated device. For example, the communication device 400 may be a desktop computer, a portable computer, a network server, a personal digital assistant (personal digital assistant, PDA), a mobile phone, a tablet computer, a wireless terminal device, an embedded device, the foregoing terminal device, the foregoing network device, or a device having a structure similar to that in FIG. 4. A type of the communication device 400 is not limited in this embodiment of this application.

The resource reservation method provided in embodiments of this application is described in detail with reference to FIG. 1 to FIG. 6.

It should be noted that names of messages between network elements, names of parameters in the messages, or the like in the following embodiments of this application are merely examples, and there may be other names in a specific implementation. This is not specifically limited in embodiments of this application.

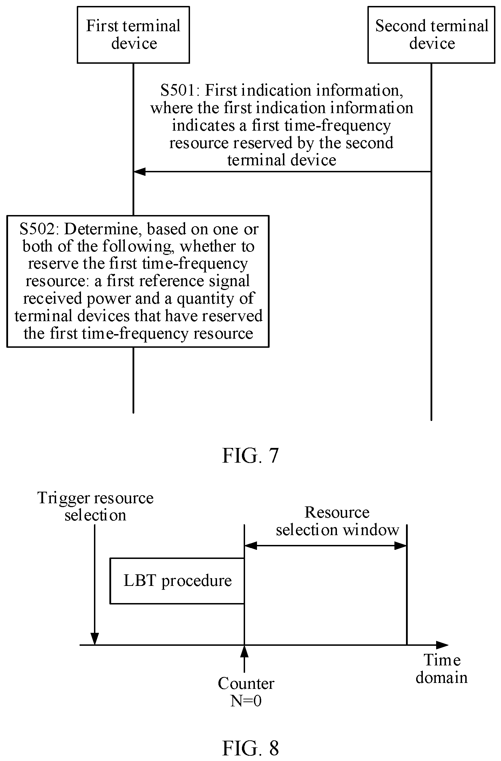

FIG. 7 shows a resource reservation method according to an embodiment of this application. In FIG. 7, the method is described by using an example in which a terminal device is an entity for performing interaction. However, the entity for performing interaction is not limited in this application. For example, the terminal device in FIG. 7 may alternatively be a chip, a chip system, or a processor that supports the terminal device in implementing the method, or may be a logical module or software that can implement all or some functions of an application function network element. The resource reservation method includes S501 and S502.

S501: A first terminal device receives first indication information from a second terminal device, where the first indication information indicates a first time-frequency resource, and the first time-frequency resource is a resource reserved by the second terminal device.

S502: The first terminal device determines, based on one or both of the following, whether to reserve the first time-frequency resource: a first reference signal received power and a quantity of terminal devices that have reserved the first time-frequency resource.

The resource reservation method provided in this embodiment of this application may be applied to a scenario in which the terminal device performs SL communication in mode 2.

In this embodiment of this application, if LBT performed by the terminal device on a channel corresponding to a time-frequency resource has not been completed (a value of an LBT counter N is not equal to 0) at a start time domain position of the time-frequency resource reserved by the terminal device, it may be considered as that LBT fails.

In this embodiment of this application, if LBT performed by the terminal device on a channel corresponding to a time-frequency resource has been completed (a value of an LBT counter N is already equal to 0) before a start time domain position of the time-frequency resource reserved by the terminal device, it may be considered as that LBT succeeds.

According to the resource reservation method provided in this embodiment of this application, when reserving a resource, the terminal device may determine, based on the first reference signal received power and/or the quantity of terminal devices that have reserved the first time-frequency resource, whether to reserve the first time-frequency resource. In other words, the terminal device may determine, based on a condition related to the first time-frequency resource, whether to repeatedly reserve the first time-frequency resource, so that overall utilization of time-frequency resources in a system can be improved in a scenario in which resource selection is performed in mode 2. Further, if the resource reservation method provided in this embodiment of this application is applied to an unlicensed band, a waste of resources caused because another terminal device cannot use a reserved time-frequency resource either when the terminal device cannot use the reserved time-frequency resource after LBT fails can be further reduced.

S501 and S502 are described in detail below.

In this embodiment of this application, a channel corresponding to the first time-frequency resource is a channel/sub-channel for which a frequency domain resource is the same as the first time-frequency resource, or a frequency domain resource includes a frequency domain resource of the first time-frequency resource. Unified descriptions are provided herein. The same applies to a channel corresponding to another time-frequency resource.

In this embodiment of this application, after triggering resource selection, the first terminal device may determine a sensing window and a resource selection window, to select, in the resource selection window based on a result of sensing in the sensing window, a time-frequency resource to be reserved. Optionally, when the first terminal device needs to send data, the first terminal device may trigger resource selection.

Optionally, the first terminal device may determine, based on a time domain position at which resource selection is triggered, a time domain resource corresponding to the sensing window or the resource selection window. For example, the first terminal device triggers resource selection in a slot n, and a time domain position of the sensing window determined by the first terminal device may be $\left[ n - T_0, n - T_{proc,0}^{SL} \right)$. $T_0$ and $T_{proc,0}^{SL}$ are determined based on related configuration information. A time domain position of the resource selection window determined by the first terminal device may be [$n + T_1, n + T_2$], where $T_1$ and $T_2$ are selected based on implementation of the first terminal device.

Optionally, the first terminal device may determine, based on a first LBT completion time point, the time domain resource corresponding to the resource selection window. In this implementation, the first LBT completion time point is an estimated LBT completion time point calculated by the first terminal device based on the value of the counter N, but is not necessarily an actual LBT completion time point. It is assumed that the first terminal device starts to sense a channel when the value of the LBT counter is N, and LBT is completed when the value of the counter N is equal to 0. If the channel sensed by the first terminal device is always idle, it may be considered that LBT time calculated by the first terminal device based on LBT-related configuration information, namely, the value of the counter N, is actual LBT completion time. Alternatively, if the channel sensed by the first terminal device is not always idle, LBT time calculated by the first terminal device based on LBT-related configuration information, namely, the value of the counter N, is not actual LBT completion time. After determining the first LBT completion time point, the first terminal device sets a start time domain position of the resource selection window to be the same as the first LBT completion time point or after the first LBT completion time point.

In a possible implementation, the first terminal device may determine an initial value of the LBT counter N based on the LBT-related configuration information, to calculate, based on LBT trigger time and the initial value of the counter N, a time point at which the value of the counter N is equal to 0, that is, the first LBT completion time point. Specifically, it is assumed that the first terminal device performs LBT on the channel starting from the LBT trigger time, and decrements the counter N from the initial value, to calculate an estimated time point at which the value of the counter N is equal to 0, and determine the calculated time point at which the value of the counter N is equal to 0 as the first LBT completion time point.

The LBT-related configuration information is used by the first terminal device to perform LBT, and the LBT-related configuration information may include at least one of the following information: $p$, $CW_p$, $CW_{min,p}$, and $CW_{max,p}$. In this embodiment of this application, for definitions of $p$, $CW_p$, $CW_{min,p}$, and $CW_{max,p}$, refer to the foregoing descriptions of LBT. Details are not described herein again.

A specific implementation in which the first terminal device calculates, based on the LBT trigger time and the initial value of the counter N, the time point at which the value of the counter N is equal to 0 is not limited in this embodiment of this application. The following describes two possible manners of calculating the time point at which the value of the counter N is equal to 0.

In a possible manner, the first terminal device calculates, based on the LBT trigger time and the initial value of the counter N, an ideal time point at which the value of the counter N is equal to 0. "Ideal" in the "ideal time point at which the value of the counter N is equal to 0" means: Assuming that the first terminal device senses the channel starting from the LBT trigger time, the counter N starts to work, and the first terminal device stops sensing and LBT is completed when the value of the counter N is equal to 0. If the channel sensed by the first terminal device is always idle, it may be considered that a calculated time point at which the value of the counter N is equal to 0 is the ideal time point at which the value of the counter N is equal to 0. For example, assuming that the first terminal device determines that the initial value of the counter N is equal to 6, and the first terminal device presets that the channel is always sensed to be idle in an LBT procedure, the first terminal device may calculate an end moment of a 6th duration $T_{sl}$ by using the LBT trigger time as a start point and using duration of a 1st duration $T_d$ plus six consecutive durations $T_{sl}$ after the 1st duration $T_d$ as duration of the LBT procedure, and use the end moment of the 6th duration $T_{sl}$ as the time point at which the value of the counter N is equal to 0.

Alternatively, in another possible implementation, the first terminal device calculates, based on the LBT trigger time and the initial value of the counter N, a non-ideal time point at which the value of the counter N is equal to 0. "Non-ideal" in the "non-ideal time point at which the value of the counter N is equal to 0" means: Assuming that the first terminal device senses the channel starting from the LBT trigger time, the counter N starts to work, and the first terminal device stops sensing and LBT is completed when the value of the counter N is equal to 0. If the channel sensed by the first terminal device is not always idle, it may be considered that a calculated time point at which the value of the counter N is equal to 0 is a non-ideal LBT completion time point. Optionally, the first terminal device may preset a time period, in the LBT procedure, in which the channel is sensed to be busy, to calculate, based on the preset time period in which the channel is busy, the time point at which the value of the counter N is equal to 0. For example, it is assumed that the first terminal device determines that the initial value of the counter N is equal to 6, and the first terminal device presets that in the LBT procedure, the channel is sensed to be busy in a 3rd duration $T_{sl}$, and the channel is sensed to be idle in the other durations $T_{sl}$. In this case, the first terminal device may calculate an end moment of a 6th duration $T_{sl}$ by using the LBT trigger time as a start point, and using duration of a 1st duration $T_d$ plus two consecutive durations $T_{sl}$ after the 1st duration $T_d$ plus a 2nd duration $T_d$ plus four consecutive durations $T_{sl}$ after the 2nd duration $T_d$ as duration of the LBT procedure, and use the end moment of the 6th duration $T_{sl}$ as the time point at which the value of the counter N is equal to 0.

In another possible implementation, when performing LBT, the first terminal device may calculate, based on a current time point and a current value of the counter N, the time point at which the value of the counter N is equal to 0. When the first terminal device calculates, based on the current time point and the current value of the counter N, the time point at which the value of the counter N is equal to 0, it may be assumed that a subsequent LBT procedure is ideal or non-ideal. For details, refer to the foregoing descriptions. The details are not described herein again.

Optionally, the first terminal device may further update the first LBT completion time point. Specifically, after the first terminal device determines one first LBT completion time point, the first terminal device may recalculate a first LBT completion time point, and update the previous first LBT completion time point to the first LBT completion time point obtained through recalculation. For example, the first terminal device determines the "ideal time point at which the value of the counter N is equal to 0" based on the LBT trigger time and the initial value of the counter N, and determines the ideal time point at which the value of the counter N is equal to 0 as the first LBT completion time point. Then, when performing LBT, the first terminal device senses that the channel is busy. Because the previous first LBT completion time point is the "ideal time point at which the value of the counter N is equal to 0", and cannot be a current time point at which LBT is actually completed, the first terminal device determines that the first LBT completion time point needs to be updated, and the first terminal device recalculates a first LBT completion time point based on the current time point and the current value of the counter N.

Optionally, when the start time domain position of the resource selection window is after the first LBT completion time point, an interval between the start time domain position of the resource selection window and the first LBT completion time point may be preset. For example, it may be set that a slot in which the start time domain position of the resource selection window is located is a 1st slot after a slot in which the first LBT completion time point is located. Assuming that the slot in which the first LBT completion time point is located is a slot 1, the start time domain position of the resource selection window may be a start time domain position of a slot 2.

For example, FIG. 8 is a diagram in which the first terminal device determines the start time domain position of the resource selection window based on the first LBT completion time point in a possible case. As shown in FIG. 8, after triggering resource selection, the first terminal device determines a time point at which the value of the LBT counter N is equal to 0, and sets the start time domain position of the resource selection window to be the same as the time point at which the value of the counter N is equal to 0.

Optionally, if the first terminal device needs to perform resource reservation for a plurality of different TBs, when the first terminal device determines the resource selection window, the first terminal device may determine the time domain position of the resource selection window based on a PDB value with a smallest value in PDB values corresponding to the plurality of different TBs. Specifically, the first terminal device may determine $T_2$ based on the PDB value with the smallest value in the PDB values corresponding to the plurality of different TBs.

Optionally, the first terminal device may determine, based on obtained SL resource pool configuration information, a frequency domain resource corresponding to the resource selection window. Specifically, the first terminal device may determine a frequency domain resource set indicated by the SL resource pool configuration information as the frequency domain resource corresponding to the resource selection window.

After determining the resource selection window, the first terminal device may determine all time-frequency resources in the resource selection window by using one or more slots as a time domain unit of the time-frequency resource, and using one or more sub-channels as a frequency domain unit of the time-frequency resource. Alternatively, the first terminal device may determine all time-frequency resources in the resource selection window by using one TB as a unit of the time-frequency resource. That the first terminal device determines all the time-frequency resources in the resource selection window may also be described as that the first terminal device initializes a resource set (which may be denoted as $S_A$), including all the time-frequency resources in the resource selection window.

For S501, if the second terminal device reserves the first time-frequency resource in a manner such as sensing, the second terminal device may indicate a time-frequency domain position of the reserved first time-frequency resource to another terminal device by using the first indication information. After the first terminal device receives, in the sensing window, the first indication information sent by the second terminal device, the first terminal device may determine, based on the first indication information, that the first time-frequency resource indicated by the indication information has been reserved by the second terminal device. The second terminal device is another terminal device different from the first terminal device. There may be one or more second terminal devices. Correspondingly, there may also be one or more pieces of first indication information.

Optionally, the first indication information may directly indicate the time-frequency domain position of the first time-frequency resource. For example, the first indication information may indicate a start time domain position and an end time domain position of the first time-frequency resource, and indicate a start frequency domain position and an end frequency domain position of the first time-frequency resource. Alternatively, the first indication information may indirectly indicate the time domain position of the first time-frequency resource. For example, the first indication information may indicate a COT start time domain position and COT duration, so that the first terminal device may determine the time domain resource of the first time-frequency resource based on the COT start time domain position and the COT duration. For another example, the first indication information may indicate an LBT start time domain position, LBT-related configuration information, and COT duration that are for performing LBT on the first time-frequency resource, so that the first terminal device may determine a COT start time domain position (that is, an LBT completion time point) based on the LBT start time domain position and the LBT-related configuration information, to further determine the time domain resource of the first time-frequency resource based on the COT start time domain position and the COT duration.

Optionally, one piece of first indication information may indicate one or more first time-frequency resources.

Optionally, the first indication information may be carried in (or included in) at least one of the following information: first-stage SCI, second-stage SCI, a sidelink media access control control element (media access control control element, MAC CE), or PC5 radio resource control (radio resource control, RRC) signaling that are from the second terminal device.

Optionally, when the first indication information is carried in the first-stage SCI, the first indication information may be a frequency resource assignment field and a time resource assignment field in the first-stage SCI. The frequency resource assignment field may indicate a frequency domain position of the first time-frequency resource, and the time resource assignment field may indicate a time domain position of the first time-frequency resource. Certainly, the first indication information may alternatively be another field in the first-stage SCI. This is not specifically limited in this embodiment of this application.

For S502, after determining that the first time-frequency resource is a time-frequency resource reserved by the second terminal device, the first terminal device may determine, based on a preset condition, whether to reserve the first time-frequency resource. Details are described below.

Optionally, the first time-frequency resource is a time-frequency resource in the resource selection window determined by the first terminal device. Specifically, the first terminal device may determine, based on the time-frequency domain position of the first time-frequency resource, whether the first time-frequency resource is in the resource selection window. If the first time-frequency resource is in the resource selection window, the first terminal device may further determine, based on a condition described below, whether to reserve the first time-frequency resource.

The first terminal device may determine, based on one or more of the following, whether to reserve the first time-frequency resource: the first reference signal received power and the quantity of terminal devices that have reserved the first time-frequency resource. It may be understood that the first reference signal received power and/or the quantity of terminal devices that have reserved the first time-frequency resource may also be referred to as a condition for the first terminal device to determine whether to reserve the first time-frequency resource. When the foregoing one or more conditions are met, the first terminal device reserves the first time-frequency resource. In this case, it may be understood as that the first time-frequency resource is to be reserved by both the first terminal device and the second terminal device, that is, the first time-frequency resource is repeatedly reserved. When all the foregoing conditions are not met, the first terminal device does not reserve the first time-frequency resource.

The foregoing conditions are separately described below.

The first reference signal received power is an RSRP measurement result of a DMRS of a PSCCH corresponding to the first indication information or an RSRP measurement result of a DMRS of a PSSCH corresponding to the first indication information. When the first indication information is carried on the PSCCH, the first reference signal received power is an RSRP measurement result of the DMRS on the PSCCH. For example, in this case, the first indication information may be carried in the first-stage SCI. When the first indication information is carried on the PSSCH, the first reference signal received power is an RSRP measurement result of the DMRS on the PSSCH. Specifically, the first terminal device measures signal powers received on all resource elements (resource elements, REs) that are used to carry the DMRS and that are on the PSCCH or the PSSCH that carries the first indication information, and an average value of all obtained measurement results is the first reference signal received power.

The quantity of terminal devices that have reserved the first time-frequency resource is a quantity of terminal devices that send, to the first terminal device, the first indication information indicating the first time-frequency resource.

The following describes how the first terminal device determines, based on the first reference signal received power and/or the quantity of terminal devices that have reserved the first time-frequency resource, whether to reserve the first time-frequency resource.

When the first terminal device may determine, based on the first reference signal received power, whether to reserve the first time-frequency resource, optionally, the first terminal device may determine, when the first reference signal received power is less than a first power threshold, that the first time-frequency resource may be reserved. Alternatively, the first terminal device may determine, when the first reference signal received power is less than a second power threshold and greater than a third power threshold, that the first time-frequency resource may be reserved.

Optionally, the first power threshold, the second power threshold, or the third power threshold may be determined based on one or more of the following information: a channel busy ratio (channel busy ratio, CBR), a channel occupancy ratio (channel occupancy ratio, CR), and a quantity of times that a channel is sensed to be busy. The CBR and/or the CR may be determined by sensing the channel corresponding to the first time-frequency resource.

In this embodiment of this application, a smaller value of the CBR or the CR or a smaller quantity of times that a channel is sensed to be busy indicates a smaller first power threshold, second power threshold, or third power threshold; and a larger value of the CBR or the CR or a larger quantity of times that a channel is sensed to be busy indicates a larger first power threshold, second power threshold, or third power threshold. A specific determining manner may be set based on an actual requirement.

Alternatively, the first power threshold or the second power threshold may be determined based on a priority $prio_{TX}$ of to-be-sent data of the first terminal device and a priority $prio_{RX}$ indicated by the first indication information. For details, refer to the manner of determining the RSRP threshold when the terminal device selects a time-frequency resource in the descriptions of mode 2 in this application.

According to this solution, the first terminal device may determine, based on a value relationship between the first reference signal received power and a preset threshold, whether to reserve the first time-frequency resource. Specifically, if the first reference signal received power is greater than the preset threshold, it indicates that a distance between the first terminal device and the second terminal device is short, and there is a high probability that LBT results of the first terminal device and the second terminal device are the same. There is a high probability that a party that succeeds in performing LBT cannot use the first time-frequency resource because a party that fails to perform LBT has reserved the first time-frequency resource. In other words, there is a high probability that a waste of resources caused by an LBT failure may not occur. In this case, the first time-frequency resource does not need to repeatedly reserve the first time-frequency resource. On the contrary, if the first reference signal received power is less than the preset threshold, it indicates that LBT results of the first terminal device and the second terminal device are likely to be different. A problem that a party that succeeds in performing LBT cannot use the first time-frequency resource because a party that fails to perform LBT has reserved the first time-frequency resource may occur. In this case, the first terminal device may repeatedly reserve the first time-frequency resource. When the second terminal device that has reserved the first time-frequency resource fails to perform LBT, if the first terminal device succeeds in performing LBT, the first time-frequency resource may be further used by the first terminal device. This improves overall utilization of the time-frequency resource.

When the first terminal device may determine, based on the quantity of terminal devices that have reserved the first time-frequency resource, whether to reserve the first time-frequency resource, the first terminal device may determine, when the quantity of terminal devices that have reserved the first time-frequency resource is less than a first threshold, that the first time-frequency resource may be reserved. The first terminal device may determine, based on the indication information (for example, the first indication information) that is from another terminal device and that indicates the time-frequency domain position of the first time-frequency resource, the quantity of terminal devices that have reserved the first time-frequency domain resource.

Optionally, one terminal device usually indicates the reserved first time-frequency resource to the first terminal device by using one piece of first indication information. Therefore, it may be understood that the first terminal device may also determine, based on a quantity of pieces of first indication information, whether to reserve the first time-frequency resource. When the quantity of pieces of the first indication information is less than the first threshold, the first terminal device may determine that the first time-frequency resource may be reserved.

Optionally, the first threshold may be determined based on one or more of the following information: the CBR, the CR, and the quantity of times that a channel is sensed to be busy. In this embodiment of this application, a smaller value of the CBR or the CR or a smaller quantity of times that a channel is sensed to be busy indicates a smaller first threshold; and a larger value of the CBR or the CR or a larger quantity of times that a channel is sensed to be busy indicates a larger first threshold. A specific determining manner may be set based on an actual requirement.

According to this solution, the first terminal device may determine, based on the quantity of terminal devices that have reserved the first time-frequency resource, whether to reserve the first time-frequency resource. Specifically, if the quantity of terminal devices that have reserved the first time-frequency resource is greater than the preset threshold, it indicates that many terminal devices repeatedly reserve the first time-frequency resource. In this case, if the first terminal device still repeatedly reserves the first time-frequency resource, it is very likely that the first terminal device cannot successfully occupy the first time-frequency resource to send data, resulting in a service data delay. On the contrary, if the quantity of terminal devices that have reserved the first time-frequency resource is less than the preset threshold, it indicates that there are not too many terminal devices that repeatedly reserve the first time-frequency resource, and after repeatedly reserving the first time-frequency resource, the first terminal device is likely to successfully occupy the first time-frequency resource to send data.

When the first terminal device may determine, with reference to the first reference signal received power and the quantity of terminal devices that have reserved the first time-frequency resource, whether to reserve the first time-frequency resource, optionally, the first terminal device may determine, when the first reference signal received power is less than the first power threshold and the quantity of terminal devices that have reserved the first time-frequency resource is less than the first threshold, that the first time-frequency resource may be reserved. Alternatively, the first terminal device may determine, when the first reference signal received power is less than the second power threshold and greater than the third power threshold and the quantity of terminal devices that have reserved the first time-frequency resource is less than the first threshold, that the first time-frequency resource may be reserved. For details, refer to the foregoing descriptions. The details are not described herein again.

The foregoing states that the first terminal device determines, based on conditions related to the first reference signal received power and/or the quantity of terminal devices that have reserved the first time-frequency resource, whether to reserve the first time-frequency resource. It may be understood that if the first time-frequency resource does not meet all the conditions for the first reference signal received power and/or the quantity of terminal devices that have reserved the first time-frequency resource, the first terminal device determines not to reserve the first time-frequency resource, or the first terminal device excludes the first time-frequency resource. For example, when the first reference signal received power is greater than the first power threshold, the first terminal device may determine to exclude the first time-frequency resource. In this case, it may be considered that the distance between the first terminal device and the second terminal device is short, there is a high probability that LBT success or failure results of the first terminal device and the second terminal device are the same, and repeated reservation does not need to be implemented.

Further, the first terminal device may further determine, with reference to the first LBT completion time point and the foregoing conditions related to the first reference signal received power and/or the quantity of terminal devices that have reserved the first time-frequency resource, whether to reserve the first time-frequency resource. Specifically, if the start time domain position of the first time-frequency resource is the same as the first LBT completion time point or is after than the first LBT completion time point, and the first time-frequency resource meets the conditions related to the first reference signal received power and/or the quantity of terminal devices that have reserved the first time-frequency resource, the first terminal device determines to reserve the first time-frequency resource. If the start time domain position of the first time-frequency resource is before the first LBT completion time point, and/or the first time-frequency resource does not meet the conditions related to the first reference signal received power and/or the quantity of terminal devices that have reserved the first time-frequency resource, the first terminal device determines not to reserve the first time-frequency resource.

Optionally, if the first terminal device needs to perform resource reservation for a plurality of different TBs, priorities $prio_{TX}$ corresponding to the plurality of different TBs need to be the same, and quantities $L_{subCH}$ of sub-channels of different resources for transmitting the different TBs need to be the same. The TB is a retransmission resource and/or a new transmission resource.

In this embodiment of this application, after determining to reserve the first time-frequency resource, the first terminal device sends, to another terminal device, indication information indicating the time-frequency domain position of the first time-frequency resource, to notify the another terminal device that the first terminal device has reserved the first time-frequency resource.

According to the resource reservation method provided in this embodiment of this application, when reserving a resource, a terminal device may determine, based on the first reference signal received power and/or the quantity of terminal devices that have reserved the first time-frequency resource, whether to repeatedly reserve the first time-frequency resource. In this way, in a scenario in which resource selection is performed in mode 2, if a terminal device reserves a time-frequency resource but fails to perform LBT, the reserved time-frequency resource can still be used by another terminal device that repeatedly reserves the time-frequency resource and succeeds in performing LBT. This can improve overall utilization of time-frequency resources in a system, and reduce a waste of resources caused because the another terminal device cannot use the reserved time-frequency resource either when the terminal device cannot use the reserved time-frequency resource.

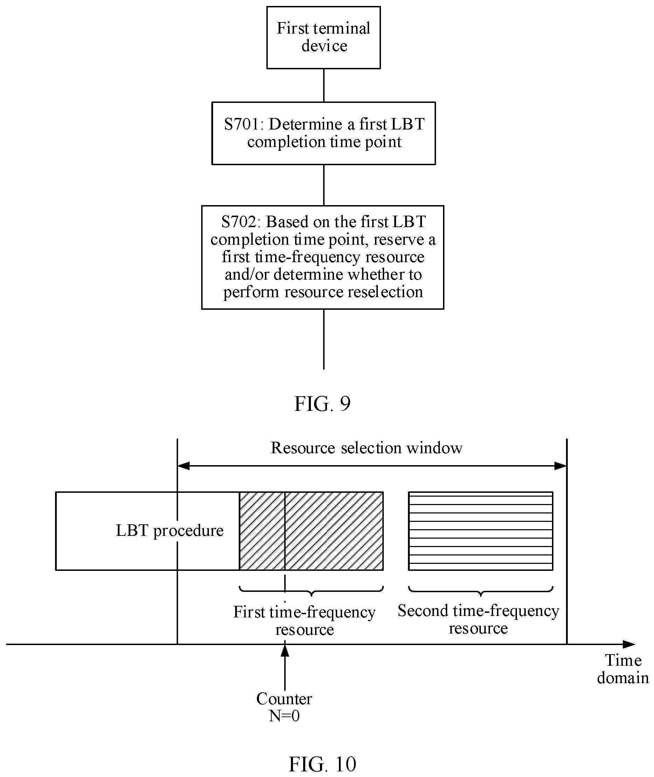

FIG. 9 shows another resource reservation method according to an embodiment of this application. In FIG. 9, the method is described by using an example in which a terminal device is an entity for performing the method. However, the entity for performing the method is not limited in this application. For example, the terminal device in FIG. 9 may alternatively be a chip, a chip system, or a processor that supports the terminal device in implementing the method, or may be a logical module or software that can implement all or some functions of an application function network element. The resource reservation method includes S701 and S702.

S701: The first terminal device determines a first LBT completion time point based on a value of an LBT counter.

S702: Based on the first LBT completion time point, the first terminal device reserves a first time-frequency resource in a resource selection window, and/or determines whether to perform resource reselection.

According to the resource reservation method provided in this embodiment of this application, a terminal device may first determine the LBT completion time point, and when reserving a resource, the terminal device may reserve a time-frequency resource based on the LBT completion time point, to avoid a case in which the reserved time-frequency resource cannot be used because LBT is not completed. Alternatively, a terminal device may determine, based on an LBT completion time point, whether to perform resource reselection, and when a reserved time-frequency resource cannot be used because LBT is not completed, may use a reselected resource to send data.

It should be noted that the embodiment in FIG. 9 in embodiments of this application may be combined with the embodiment in FIG. 7.

For a specific implementation of S701 in which the first terminal device determines the first LBT completion time point based on the value of the LBT counter, refer to the foregoing descriptions of S501. Details are not described herein again.

For S702, optionally, the first terminal device may reserve, in the resource selection window, the first time-frequency resource based on the first LBT completion time point. Specifically, the first terminal device reserves, in the resource selection window, a time-frequency resource whose start time domain position is after the first LBT completion time point.

Optionally, when reserving the first time-frequency resource in the resource selection window, the first terminal device may further determine, with reference to the first reference signal received power and/or the quantity of terminal devices that have reserved the first time-frequency resource, whether to reserve the first time-frequency resource. For a specific implementation, refer to the foregoing descriptions of S502, how the first terminal device determines, based on the first reference signal received power and/or the quantity of terminal devices that have reserved the first time-frequency resource, whether to reserve the first time-frequency resource.

Alternatively, when the first terminal device reserves the first time-frequency resource in the resource selection window, a manner in which the terminal device reserves the time-frequency resource in the resource selection window in an existing protocol may be further used. This is not specifically limited in this embodiment of this application.

For S702, optionally, the first terminal device may determine, based on the first LBT completion time point, whether resource reselection needs to be performed on the first time-frequency resource that has been reserved.

Specifically, if a start time domain position of the first time-frequency resource is after the first LBT completion time point, resource reselection does not need to be performed, and the first terminal device may perform data transmission on the first time-frequency resource. If a start time domain position of the first time-frequency resource is before the first LBT completion time point, it may be considered that the first time-frequency resource cannot be used after LBT is completed, and resource reselection needs to be performed. For details about the first LBT completion time point, refer to the foregoing descriptions of the first LBT completion time point in S501 and S502. The details are not described herein again. Condition 1: A start time domain position of a second time-frequency resource is the same as an LBT completion time point or after an LBT completion time point.

If the second time-frequency resource meets the condition 1, the first terminal device may further determine whether the second time-frequency resource meets the following conditions 2 to 5. If the second time-frequency resource meets at least one of the following conditions 2 to 5, the first terminal device may select the second time-frequency resource to send data.

Condition 2: A second time-frequency resource is not reserved by another terminal device.

Condition 3: When a second time-frequency resource has been reserved by another terminal device (for example, a second terminal device), a second reference signal received power is less than a second threshold. The second reference signal received power is an RSRP measurement result of a DMRS of a PSSCH corresponding to second indication information or an RSRP measurement result of a DMRS of a PSCCH corresponding to second indication information. The second indication information is information that is sent by the second terminal device and that indicates a time-frequency domain position of the second time-frequency resource. For details, refer to the first indication information. The second threshold is an RSRP threshold determined based on a priority $prio_{TX}$ indicated by the second indication information and $prio_{TX}$ of to-be-sent data of the first terminal device. For details, refer to the manner of determining the RSRP threshold when the terminal device selects a time-frequency resource in the existing mode 2.

Condition 4: When a second time-frequency resource has been reserved by another terminal device, a second reference signal received power is less than a first power threshold, or a second reference signal received power is less than a second power threshold and greater than a third power threshold. The first power threshold, the second power threshold, or the third power threshold may be determined based on one or more of the following information: a CBR, a CR, and a quantity of times that a channel is sensed to be busy.

Condition 5: When a second time-frequency resource has been reserved by another terminal device, a quantity of terminal devices that have reserved the second time-frequency resource is less than a first threshold.

Optionally, a size (a size of a time domain resource and a size of a frequency domain resource) of the second time-frequency resource reselected by the first terminal device may be consistent with a size of the first time-frequency resource. For example, the first time-frequency resource occupies one slot in time domain and occupies one sub-channel in frequency domain. When performing resource reselection, the first terminal device also chooses to occupy one slot in time domain and occupy one sub-channel in frequency domain as the reselected second time-frequency resource.

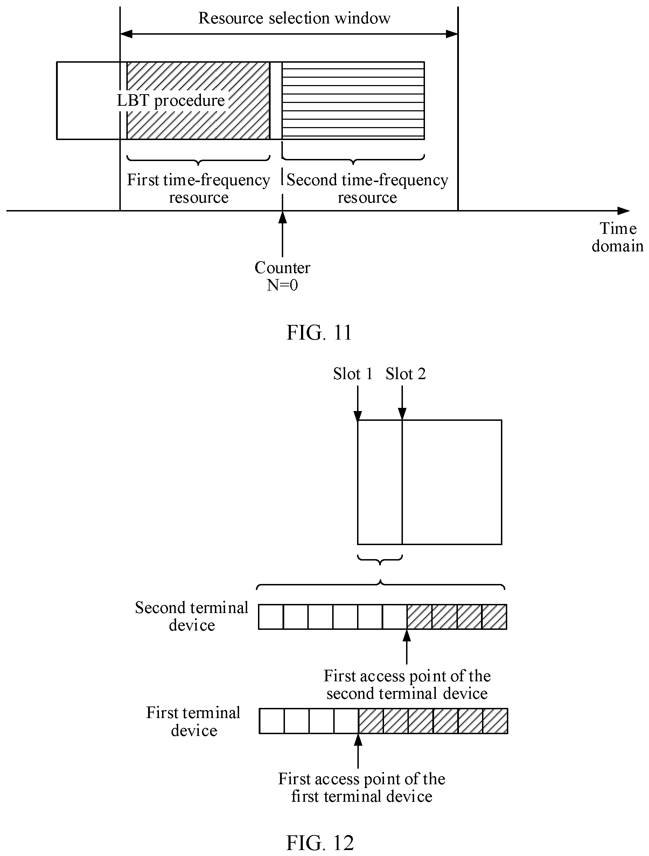

For example, the following describes, with reference to the accompanying drawings, how the first terminal device reselects the second time-frequency resource in this embodiment of this application. As shown in FIG. 10, a part of the first time-frequency resource cannot be accessed because the part of the time-frequency resource is before an LBT completion time point (a time point at which a value of an LBT counter N is equal to 0), and the first terminal device is triggered to reselect a time-frequency resource. The first terminal device reselects a second time-frequency resource whose start time domain position is after the time point at which the value of N is equal to 0 and whose size is the same as the size of the first time-frequency resource. For another example, as shown in FIG. 11, the first time-frequency resource is completely before an LBT completion time point (a time point at which a value of an LBT counter N is equal to 0). As a result, the first terminal device cannot access the first time-frequency resource, and the first terminal device is triggered to perform resource reselection. The first terminal device reselects, by using the time point at which the value of N is equal to 0 as a start time domain position, a second time-frequency resource whose size is the same as the size of the first time-frequency resource.

Optionally, the resource reservation method provided in this embodiment of this application may further include S503.

S503: The first terminal device performs LBT.

In this embodiment of this application, the first terminal device may perform LBT on a channel corresponding to the selected time-frequency resource (which may be the reserved first time-frequency resource or the reselected second time-frequency resource), and determine, based on a result of LBT, whether the corresponding channel can be accessed, that is, determine whether the reserved time-frequency resource can be used to perform data transmission. Optionally, after selecting a time-frequency resource, the first terminal device may perform LBT on a channel corresponding to the selected time-frequency resource, or the first terminal device may first perform LBT on a channel corresponding to each time-frequency resource included in the resource selection window, and then select a time-frequency resource in the resource selection window. This is not limited in this embodiment of this application.

A time point at which LBT is actually completed, that is, a time point at which the value of the counter N is actually equal to 0, is referred to as a second LBT completion time point below. Whether the selected time-frequency resource can be used is described in detail based on different LBT cases.

If the selected time-frequency resource is completely after the second LBT completion time point in time domain, the first terminal device may use the selected time-frequency resource to perform data transmission.

If a part of the selected time-frequency resource is before the second LBT completion time point in time domain, the first terminal device may use a part of the selected time-frequency resource that is after the second LBT completion time point in time domain (which may be considered as LBT performed on the part of time-frequency resource is successful) to perform data transmission, or the first terminal device may abandon the selected time-frequency resource.

If the selected time-frequency resource is completely before the second LBT completion time point in time domain, the first terminal device may abandon the selected time-frequency resource.

Optionally, if the first terminal device abandons the selected time-frequency resource, the first terminal device may further perform resource reselection.

When the start time domain position of the time-frequency resource selected by the first terminal device is after the second LBT completion time point, and the first terminal device may use the selected time-frequency resource to perform data transmission, because the time-frequency resource selected by the first terminal device may be reserved by another terminal device, if the first terminal device and the another terminal device simultaneously send data on the selected time-frequency resource, a resource conflict occurs. To resolve a problem of the resource conflict caused by simultaneous access of a plurality of terminal devices to a repeatedly reserved time-frequency resource, the following describes a resource conflict avoidance solution provided in this embodiment of this application by using an example in which the time-frequency resource selected by the first terminal device is the first time-frequency resource reserved by the first terminal device.

The first terminal device determines a time point in time domain (where the time point is referred to as a first access point below). Specifically, the first access point is before the start time domain position of the first time-frequency resource, and there is first preset duration between the first access point and the start time domain position of the first time-frequency resource. After determining the first access point, the first terminal device accesses, starting from the first access point, a channel corresponding to the first time-frequency resource, to occupy the first time-frequency resource. The first preset duration may be preconfigured, configured by a higher layer, determined based on a priority of the to-be-sent data of the first terminal device (which may also be referred to as service data of the first terminal device), or may be randomly determined.

It may be understood that, the foregoing resource conflict avoidance solution is also applicable to replacing the first time-frequency resource with the second time-frequency resource when the first terminal device selects the second time-frequency resource to perform data transmission and succeeds in performing LBT on the second time-frequency resource.

According to this solution, when different terminal devices repeatedly select a same time-frequency resource, the different terminal devices may attempt, based on different access points, to access a channel corresponding to the time-frequency resource. A terminal device that first accesses the channel may shield another terminal device, and preempt to use the time-frequency resource to perform data transmission, so as to avoid the resource conflict.

Optionally, 9 $\mu$s may be used as a granularity for the first preset duration. For example, the first preset duration may be configured as 5*9 µs, and the start time domain position of the first time-frequency resource may be a start time point of a slot 1. The first terminal device may determine, based on the first preset duration and the start time domain position of the first time-frequency resource, that the first access point is 45 µs before the start time point of the slot 1, so as to access, based on the first access point, the channel corresponding to the first time-frequency resource.

For example, it is assumed that both the first terminal device and the second terminal device reserve the first time-frequency resource, and both successfully complete LBT. A diagram in which the first terminal device and the second terminal device attempt, based on respective first access points thereof, to access the channel corresponding to the first time-frequency resource may be shown in FIG. 12. First preset duration preconfigured by the first terminal device is 6*9 µs, that is, 54 µs, and first preset duration preconfigured by the second terminal device is 4*9 µs, that is, 36 µs. The start time domain position of the first time-frequency resource is a start time point of a slot 2, and a slot before the first time-frequency resource is the slot 1. The first terminal device starts to access the channel corresponding to the first time-frequency resource at a time point (the first access point of the first terminal device) corresponding to 54 µs before the start time domain position of the first time-frequency resource, and the second terminal device starts to access the channel corresponding to the first time-frequency resource at a time point (the first access point of the second terminal device) corresponding to 36 µs before the start time domain position of the first time-frequency resource. Because the time point at which the first terminal device starts to access is earlier than the time point at which the second terminal device starts to access, the first terminal device may first access the channel corresponding to the first time-frequency resource, to preempt to use the first time-frequency resource to perform data transmission, so as to avoid the resource conflict.

Optionally, when the first preset duration is determined based on the priority of the to-be-sent data of the first terminal device, the first preset duration may be in a direct proportion to the priority of the to-be-sent data. To be specific, if the priority of the to-be-sent data is higher, the first preset duration is longer, and the first access point is earlier than the start time domain position of the first time-frequency resource. In other words, when both the first terminal device and the second terminal device reserve the first time-frequency resource and successfully complete LBT, if a priority of the service data of the first terminal device is higher than a priority of service data of the second terminal device, because the first access point of the first terminal device is earlier than the first access point of the second terminal device, the first terminal device may access the channel corresponding to the first time-frequency resource earlier in comparison with the second terminal device, that is, the first terminal device may first occupy the first time-frequency resource, and preempt to send the service data on the first time-frequency resource.

The foregoing describes how the terminal device determines, based on LBT, whether to repeatedly reserve the first time-frequency resource in the resource reservation scenario in mode 2. It may be understood that, when the first time-frequency resource corresponds to a single channel, the first terminal device may implement single-channel access based on the first time-frequency resource. Further, based on single-channel access, this embodiment of this application further considers how to implement LBT-based multichannel access in the resource reservation scenario in mode 2. The following describes the resource reservation method in detail.

In a multichannel access scenario, a frequency domain resource corresponding to the resource selection window may include a plurality of channels, and LBT needs to be performed on each channel.

First, the first terminal device reserves a plurality of first time-frequency resources in the resource selection window.

Specifically, a MAC layer of the first terminal device determines, based on a service requirement, a quantity of first time-frequency resources that need to be reserved, and sends, to a physical layer, indication information for determining a first time-frequency resource that needs to be reserved.

Optionally, the MAC layer of the first terminal device indicates, to the physical layer, the quantity of resources of the first time-frequency resource that needs to be reserved (which may also be understood as a total quantity of interlaces corresponding to a plurality of channels on which LBT needs to be performed), a quantity of interlaces respectively corresponding to the plurality of channels on which LBT needs to be performed, and channel indication information. Alternatively, the MAC layer of the first terminal device indicates, to the physical layer, the quantity of resources of the first time-frequency resource that needs to be reserved and a quantity of interlaces respectively corresponding to a plurality of channels on which LBT needs to be performed. Alternatively, the MAC layer of the first terminal device indicates, to the physical layer, the quantity of resources of the first time-frequency resource that needs to be reserved and channel indication information. Alternatively, the MAC layer of the first terminal device indicates, to the physical layer, a quantity of interlaces respectively corresponding to a plurality of channels on which LBT needs to be performed and channel indication information. Alternatively, the MAC layer of the first terminal device indicates, to the physical layer, the quantity of resources of the first time-frequency resource that needs to be reserved.

The channel indication information may include a quantity of channels on which LBT needs to be performed, or may include specific information of a channel, where the specific information of the channel indicates a channel on which LBT needs to be performed. If the channel indication information indicated by the MAC layer to the physical layer includes the number of channels on which LBT needs to be performed, the physical layer determines specific information of a channel to be accessed or selected, and reports the specific information of the determined channel to the MAC layer. If the MAC layer indicates, to the physical layer, only the quantity of resources of the first time-frequency resource that needs to be reserved, the physical layer determines specific information of a channel to be accessed or selected (that is, a channel on which LBT needs to be performed) and a quantity of interlaces respectively corresponding to channels, and reports, to the MAC layer, the specific information of the determined channel and/or the quantity of interlaces respectively corresponding to channels. If the MAC layer indicates, to the physical layer, the quantity of resources of the first time-frequency resource that needs to be reserved and the quantity of interlaces, the physical layer determines specific information of a channel to be accessed or selected, and reports the determined specific information of the channel to the MAC layer.

Optionally, the channel indication information may not be exchanged between the physical layer and the MAC layer, but the channel indication information is determined based on an LBT procedure. It may be understood that a quantity of channels or specific information of each channel is determined in the LBT procedure.

The quantity of channels indicated by the channel indication information may be a quantity that is of channels on which LBT needs to be performed and that is determined by the first terminal device.

After the first terminal device determines the quantity of first time-frequency resources that need to be reserved, the first terminal device may reserve, in the resource selection window, a plurality of first time-frequency resources that meet at least one of the following conditions. The plurality of reserved first time-frequency resources respectively corresponds to the plurality of channels on which LBT needs to be performed.

Condition 6: A first reference signal power of the first time-frequency resource is less than a first power threshold, or a first reference signal power of the first time-frequency resource is less than a second power threshold and greater than a third power threshold. For a specific implementation of the condition 6, refer to the descriptions of S502. The details are not described herein again.

Condition 7: The quantity of terminal devices that have reserved the first time-frequency resource is less than a first threshold. For a specific implementation of the condition 7, refer to the descriptions of S502. The details are not described herein again.

Condition 8: In the resource selection window, if available resources in a time-frequency resource corresponding to a channel are not less than Y%, the first terminal device may select, from the available resources corresponding to the channel, the first time-frequency resource to be reserved. Optionally, the first terminal device may randomly select the first time-frequency resource from available resources corresponding to a channel, or may select, from available resources corresponding to a channel, the first time-frequency resource that meets the condition 6 and/or the condition 7, or may select, based on another condition, the first time-frequency resource from available resources corresponding to a channel. This is not specifically limited in this application. In the condition 8, for how to determine whether available resources corresponding to a channel are not less than Y%, refer to the descriptions of how to exclude a time-frequency resource from $S_A$ until remaining resources in $S_A$ (an available resource in $S_A$ may be referred to as an available resource in the resource selection window) are not less than X% of the total resources in the resource selection window in the existing scenario in mode 2. A manner of determining a value of Y may be equivalent to the manner of determining the value of X. Alternatively, a value of Y may be determined in another manner, for example, the value of Y may be determined based on a priority of to-be-sent data corresponding to a channel. This is not limited in this embodiment of this application.

Condition 9: After a time-frequency resource on which an RSRP measurement result of a DMRS of a PSSCH or a PSCCH corresponding to received first-stage SCI is higher than a corresponding RSRP threshold is excluded from the resource selection window, the first terminal device may select a plurality of first time-frequency resources from the remaining time-frequency resources. For details, refer to the foregoing descriptions of how the device excludes a time-frequency resource from the resource selection window in the existing scenario in mode 2. The details are not described herein again.

Further, when reserving a plurality of first time-frequency resources in the resource selection window, the first terminal device may further select, based on first LBT completion time points respectively corresponding to the plurality of channels on which LBT needs to be performed, a first time-frequency resource whose start time domain position is the same as a corresponding first LBT completion time point or whose start time domain position is after a corresponding first LBT completion time point. For details, refer to the foregoing descriptions of determining, by the first terminal device based on the first LBT completion time point, whether to reserve the first time-frequency resource in S501 and S502. The details are not described herein again.

Optionally, to ensure that access time of a plurality of channels is the same, the first terminal device may reserve a plurality of first time-frequency resources whose start time domain positions are the same.

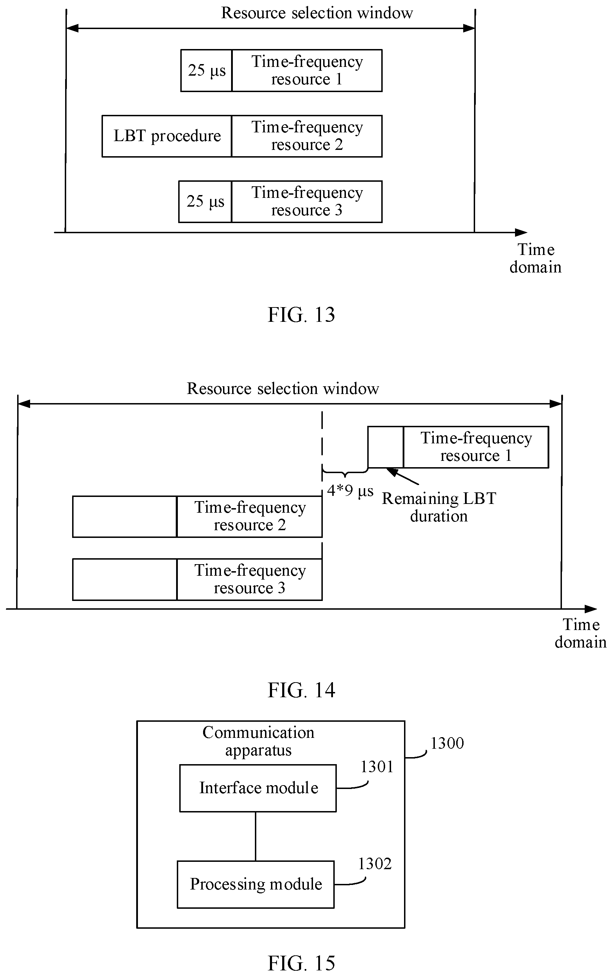

For example, as shown in FIG. 13, it is assumed that the first terminal device accesses a channel 1, a channel 2, and a channel 3 through a Type B multichannel access procedure. LBT procedures on the channel 1, the channel 2, and the channel 3 maintain same $CW_p$. The first terminal device may access the channel 2 based on a Type 1 LBT procedure. For the channel 1 and the channel 3, the first terminal device senses the channel 1 and the channel 3 for 25 $\mu$s before accessing the channel 2. The first terminal device determines, based on LBT-related configuration information corresponding to the channel 2, a first LBT completion time point corresponding to the channel 2, and reserves a time-frequency resource 1, a time-frequency resource 2, and a time-frequency resource 3 whose start time domain positions are the same as or after the first LBT completion time point (where as shown in FIG. 13, the start time domain position is the same as the first LBT completion time point). Start time domain positions of the time-frequency resource 1, the time-frequency resource 2, and the time-frequency resource 3 are the same.

Optionally, if the first terminal device knows that some of a plurality of channels that need to be accessed cannot be simultaneously accessed, for example, time-frequency resources corresponding to some channels are reserved by another terminal device, or initial values of counters N for performing LBT on some channels are different, the first terminal device may directly reserve, when reserving first time-frequency resources respectively corresponding to the plurality of channels that need to be accessed, the first time-frequency resources used for subsequent data sending. For example, as shown in FIG. 14, it is assumed that the first terminal device determines that three time-frequency resources need to be reserved, respectively corresponding to the channel 1, the channel 2, and the channel 3, and the first terminal device determines to access the channel 1, the channel 2, and the channel 3 based on the Type 1 LBT procedure. The channel 2 and the channel 3 correspond to a same Initial value of LBT counters N, and the channel 1 corresponds to a different initial value of an LBT counter N. If the first terminal device determines that the channel 1, the channel 2, and the channel 3 correspond to same LBT start time, first LBT completion time points respectively corresponding to the channel 2 and the channel 3 are the same, and a first LBT completion time point corresponding to the channel 1 is after the first LBT completion time point corresponding to the channel 2 and the channel 3, the first terminal device cannot simultaneously access the channel 1, the channel 2, and the channel 3 because the first terminal device cannot keep sensing the channel 1 when accessing the channel 2 and the channel 3 to send data, and in this case, the first terminal device needs to suspend the LBT procedure on the channel 1. Therefore, the first terminal device may reserve the time-frequency resource 2 whose start time domain position is after the first LBT completion time point corresponding to the channel 2, the time-frequency resource 3 whose start time domain position is the same as the start time domain position of the time-frequency resource 2, and the time-frequency resource 1 whose start time domain position is at a distance from end time domain positions of the time-frequency resource 2 and the time-frequency resource 3 by preset duration, so that LBT on the channel 1, the channel 2, and the channel 3 can be successfully completed, the channel 1, the channel 2, and the channel 3 are accessed to use the time-frequency resource 1, the time-frequency resource 2, and the time-frequency resource 3. As shown in FIG. 14, the preset duration may be 4*9 $\mu$s plus LBT duration remaining after the LBT procedure on the channel 1 is suspended. Alternatively, the preset duration may be estimated duration (not shown in FIG. 14) for performing LBT on the channel 1 after the LBT procedure on the channel 1 is re-initialized.

Optionally, after the first terminal device reserves the plurality of first time-frequency resources, in different cases, procedures in which the first terminal device accesses the first time-frequency resource based on the LBT procedure are also different. The following provides detailed descriptions with reference to different cases.

Case 1: In a process of separately performing LBT on channels corresponding to the plurality of first time-frequency resources (which may also be referred to as a multichannel access process), if LBT on at least one channel fails, channel access procedures corresponding to all the first time-frequency resources are re-initialized, that is, LBT is re-started on the channels corresponding to all the first time-frequency resources.

Further, to avoid a case in which the first terminal device cannot use a first time-frequency resource because a start time domain position of the first time-frequency resource is before a corresponding second LBT completion time point due to an LBT failure, the LBT failure of the at least one channel may further trigger resource reselection on all channels on which LBT is performed, and the first terminal device calculates first LBT completion time points corresponding to the channels respectively corresponding to the plurality of first time-frequency resources, reselect a plurality of second time-frequency resources whose start time domain positions are after the corresponding first LBT completion time point. Optionally, a size of the reselected second time-frequency resource is the same as a size of the corresponding first time-frequency resource.

Case 2: In a multichannel access process, an LBT failure of any channel does not affect an LBT procedure on another channel.

In a possible implementation, for a channel on which LBT fails, if the first terminal device accesses the channel based on the Type 1 LBT procedure, after LBT fails, the first terminal device may continue, after waiting for 4 * $T_{sl}$, to perform LBT if the first terminal device senses, in $T_d$, that the channel in an idle state again, that is, continue to decrement the LBT counter N. Alternatively, the first terminal device may re-initialize the channel access procedure, to re-perform LBT on a channel.

Further, an LBT failure of at least one channel may further trigger resource reselection on the channel on which LBT fails. The first terminal device calculates a first LBT completion time point corresponding to the channel on which LBT fails, and reselects a second time-frequency resource whose start time domain position is after the corresponding first LBT completion time point. Optionally, a size of the reselected second time-frequency resource is the same as a size of the corresponding first time-frequency resource.

Optionally, when LBT on a channel succeeds, the first terminal device may reserve, when sending data on a corresponding first time-frequency resource, a third time-frequency resource for accessing the channel again. Optionally, a size of the reselected third time-frequency resource may be the same as a size of the corresponding first time-frequency resource.

Case 3: In a multichannel access process, for some channels, if LBT on at least one of these channels fails, channel access procedures corresponding to all the first time-frequency resources are re-initialized, and resource reselection is triggered. For the other channels, an LBT failure of any channel in these channels does not affect an LBT procedure on the other channels, and resource reselection is performed only on the channel on which LBT fails, to reselect a second time-frequency resource.

Optionally, the first terminal device may further separately perform resource re-evaluation on the first time-frequency resources before the preset duration from the start time domain position of the first time-frequency resource, and if the resource re-evaluation on the first time-frequency resource fails, reselect the corresponding second time-frequency resource. For example, it is assumed that a first time-frequency resource occupies a slot m in time domain, and the first terminal device may perform resource re-evaluation at a moment, namely, slot m-T3. For a specific implementation, refer to the descriptions of S501 and S502. The details are not described herein again.

It may be understood that in the foregoing embodiments, methods and/or steps implemented by the first terminal device may alternatively be implemented by a component (for example, a chip or a circuit) that can be used in the first terminal device.

The foregoing mainly describes the solutions provided in embodiments of this application from the perspective of interaction between devices. Correspondingly, an embodiment of this application further provides a communication apparatus, and the communication apparatus is configured to implement the foregoing various methods. The communication apparatus may be the first terminal device in the foregoing method embodiments, or an apparatus including the first terminal device, or a component that can be used in the first terminal device. It may be understood that, to implement the foregoing functions, the communication apparatus includes a hardware structure and/or a software module for performing a corresponding function. A person skilled in the conventional technology should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the conventional technology may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the communication apparatus is the first terminal device in the foregoing method embodiments. FIG. 15 is a diagram of a structure of a communication apparatus 1300. The communication apparatus 1300 includes an interface module 1301 and a processing module 1302. The interface module 1301 may alternatively be referred to as a transceiver module or a transceiver unit. The interface module 1301 is configured to implement a transceiver function. For example, the interface module may be a transceiver circuit, a transceiver machine, a transceiver, or a communication interface.

In a possible design, the interface module 1301 is configured to receive first indication information from a second terminal device, where the first indication information indicates a first time-frequency resource, and the first time-frequency resource is a resource reserved by the second terminal device.

The processing module 1302 is configured to determine, based on one or both of the following, whether to reserve the first time-frequency resource: a first reference signal received power and a quantity of terminal devices that have reserved the first time-frequency resource, where the first reference signal received power is a reference signal received power of a physical sidelink control channel or a physical sidelink shared channel corresponding to the first indication information.

In this embodiment, the communication apparatus 1300 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the conventional technology may figure out that the communication apparatus 1300 may be in a form of the communication apparatus 400 shown in FIG. 6.

For example, the processor 401 in the terminal device shown in FIG. 6 may invoke the computer-executable instructions stored in the memory 403, to enable the communication apparatus 400 to perform the resource reservation method in the foregoing method embodiments. Specifically, functions/implementation processes of the interface module 1301 and the processing module 1302 in FIG. 13 may be implemented by the processor 401 in the communication apparatus 400 shown in FIG. 6 by invoking the computer-executable instructions stored in the memory 403. Alternatively, a function/an implementation process of the processing module 1302 in FIG. 15 may be implemented by the processor 401 in the terminal device shown in FIG. 4 by invoking the computer-executable instructions stored in the memory 403. A function/an implementation process of the interface module 1301 in FIG. 15 may be implemented through the communication interface 404 in the communication apparatus 400 shown in FIG. 6.

The communication apparatus 1300 provided in this embodiment may perform the resource reservation method. Therefore, for technical effects that can be achieved by the communication apparatus, refer to the foregoing method embodiments. Details are not described herein again.

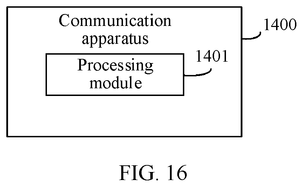

FIG. 16 is a diagram of a structure of another communication apparatus 1400. The communication apparatus 1400 includes a processing module 1401.

In a possible design, the processing module 1401 is configured to determine a first LBT completion time point based on a value of an LBT counter N. The processing module 1401 is further configured to: based on the first LBT completion time point, reserve a first time-frequency resource in a resource selection window, and/or determine whether to perform resource reselection.

In this embodiment, the communication apparatus 1400 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the conventional technology may figure out that the communication apparatus 1400 may be in a form of the communication apparatus 400 shown in FIG. 4.

For example, the processor 401 in the terminal device shown in FIG. 6 may invoke the computer-executable instructions stored in the memory 403, to enable the communication apparatus 400 to perform the resource reservation method in the foregoing method embodiments. Specifically, a function/an implementation process of the processing module 1401 in FIG. 16 may be implemented by the processor 401 in the communication apparatus 400 shown in FIG. 6 by invoking the computer-executable instructions stored in the memory 403.

The communication apparatus 1400 provided in this embodiment may perform the resource reservation method. Therefore, for technical effects that can be achieved by the communication apparatus, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system on chip) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing modules or units are implemented through hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedures.

Optionally, an embodiment of this application further provides a chip system, including: at least one processor and an interface, where the at least one processor is coupled to a memory through the interface; and when the at least one processor executes a computer program or instructions in the memory, the method according to any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented by using software, hardware, firmware, or any combination thereof. When a software program is used to implement the embodiments, all or some of the embodiments may be implemented in a form of a computer program product.

This application provides a computer program product, including one or more computer instructions.

When the computer instructions are run on a communication apparatus, any method in embodiments of this application is performed.

When the computer program instructions are loaded and executed on the computer, the procedure or functions according to embodiments of this application are all or partially generated. The computer may be a general-purpose computer, a dedicated computer, a computer network, or other programmable apparatuses.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like.

Although this application is described with reference to embodiments, in a process of implementing this application that claims protection, a person skilled in the conventional technology may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as any of or all modifications, variations, combinations or equivalents that cover the scope of this application. If these modifications and variations of this application fall within the scope of the claims of this application and equivalent technologies thereof, this application is also intended to cover these modifications and variations.

**Claims**

1. A resource reservation method, wherein the method comprises:

   receiving, by a first terminal device, first indication information from a second terminal device, wherein the first indication information indicates a first time-frequency resource, and the first time-frequency resource is a resource reserved by the second terminal device; and
   determining, by the first terminal device based on one or both of the following, whether to reserve the first time-frequency resource:
   a first reference signal received power and a quantity of terminal devices that have reserved the first time-frequency resource, wherein the first reference signal received power is a reference signal received power of a physical sidelink control channel or a physical sidelink shared channel corresponding to the first indication information.

2. The method according to claim 1, wherein the determining, by the first terminal device based on a first reference signal received power, whether to reserve the first time-frequency resource comprises:

   when the first reference signal received power is less than a first power threshold, determining, by the first terminal device, to reserve the first time-frequency resource; or
   when the first reference signal received power is less than a second power threshold and greater than a third power threshold, determining, by the first terminal device, to reserve the first time-frequency resource.

3. The method according to claim 2, wherein the first power threshold, the second power threshold, or the third power threshold is determined based on one or more of the following information: a channel busy ratio, a channel occupancy ratio, and a quantity of times that a channel is sensed to be busy.

4. The method according to any one of claims 1 to 3, wherein the determining, by the first terminal device based on a quantity of terminal devices that have reserved the first time-frequency resource, whether to reserve the first time-frequency resource comprises:
   when the quantity of terminal devices that have reserved the first time-frequency resource is less than a first threshold, determining, by the first terminal device, to reserve the first time-frequency resource.

5. The method according to claim 4, wherein the first threshold is determined based on one or more of the following information: the channel busy ratio, the channel occupancy ratio, and the quantity of times that a channel is sensed to be busy.

6. The method according to any one of claims 1 to 5, wherein the first time-frequency resource is in a resource selection window.

7. The method according to claim 6, wherein a start time domain position of the resource selection window is determined based on a first listen before talk LBT completion time point, wherein the first LBT completion time point is determined based on a value of an LBT counter.

8. The method according to any one of claims 1 to 7, wherein the method further comprises:
determining, by the first terminal device based on the first LBT completion time point, whether to perform resource reselection, wherein the first LBT completion time point is determined based on the value of the LBT counter.

9. The method according to claim 8, wherein the determining, by the first terminal device based on the first LBT completion time point, whether to perform resource reselection comprises:

   when a start time domain position of the first time-frequency resource is before the first LBT completion time point, determining, by the first terminal device, to perform resource reselection and selecting a second time-frequency resource, wherein a start time domain position of the second time-frequency resource is after the first LBT completion time point; or
   when a start time domain position of the first time-frequency resource is after the first LBT completion time point, determining, by the first terminal device, not to perform resource reselection.

10. The method according to claim 8 or 9, wherein the selecting, by the first terminal device, a second time-frequency resource comprises:
determining, by the first terminal device, the second time-frequency resource based on one or both of the following:
a second reference signal received power and a quantity of terminal devices that have reserved the second time-frequency resource, wherein the second reference signal received power is a reference signal received power of a physical sidelink control channel or a physical sidelink shared channel corresponding to second indication information.

11. The method according to any one of claims 1 to 10, wherein when values of LBT counters of the first terminal device and the second terminal device are decremented to 0, and a priority of service data of the first terminal device is higher than a priority of service data of the second terminal device, the method further comprises:
sending, by the first terminal device, the service data on the first time-frequency resource.

12. The method according to any one of claims 1 to 11, wherein
the first indication information is carried in at least one of the following information: firststage sidelink control information, second-stage sidelink control information, a sidelink media access control control element, or PC5 radio resource control signaling.

13. A resource reservation method, wherein the method comprises:

   determining, by a first terminal device, a first LBT completion time point based on a value of a listen before talk LBT counter N; and
   based on the first LBT completion time point, reserving, by the first terminal device, a first time-frequency resource in a resource selection window, and/or determining whether to perform resource reselection.

14. The method according to claim 13, wherein the reserving, by the first terminal device based on the first LBT completion time point, a first time-frequency resource in a resource selection window comprises:
reserving, by the first terminal device in the resource selection window, the first time-frequency resource whose start time domain position is after the first LBT completion time point.

15. The method according to claim 13, wherein the determining, by the first terminal device based on the first LBT completion time point, whether to perform resource reselection comprises:
when a start time domain position of the first time-frequency resource is before the first LBT completion time point, determining, by the first terminal device, to perform resource reselection and selecting a second time-frequency resource, wherein a start time domain position of the second time-frequency resource is after the first LBT completion time point.

16. The method according to claim 15, wherein the first terminal device determines the second time-frequency resource based on one or both of the following:

a second reference signal received power and a quantity of terminal devices that have reserved the second time-frequency resource, wherein the second reference signal received power is a reference signal received power of a physical sidelink control channel or a physical sidelink shared channel corresponding to second indication information.

17. The method according to claim 16, wherein the selecting, by the first terminal device, a second time-frequency resource comprises:
selecting, by the first terminal device, the second time-frequency resource when the quantity of terminal devices that have reserved the second time-frequency resource is less than a first threshold.

18. The method according to claim 17, wherein the first threshold is determined based on one or more of the following information: a channel busy ratio, a channel occupancy ratio, and a quantity of times that a channel is sensed to be busy.

19. The method according to claim 16, wherein the selecting, by the first terminal device, a second time-frequency resource comprises:

when the second time-frequency resource is reserved by a second terminal device, and the second reference signal received power is less than a first power threshold, or
when the second time-frequency resource is reserved by a second terminal device, and the second reference signal received power is less than a second power threshold and greater than a third power threshold, selecting, by the first terminal device, the second time-frequency resource.

20. The method according to claim 19, wherein the first power threshold, the second power threshold, or the third power threshold is determined based on one or more of the following information: a channel busy ratio, a channel occupancy ratio, and a quantity of times that a channel is sensed to be busy.

21. The method according to claim 16, wherein the selecting, by the first terminal device, a second time-frequency resource comprises:
reselecting, by the first terminal device, the second time-frequency resource when the second time-frequency resource is reserved by a second terminal device and the second reference signal received power is less than a second threshold.

22. The method according to claim 21, wherein the second threshold is determined based on a priority indicated by the second indication information and a priority of to-be-sent data of the first terminal device, wherein the second indication information indicates the second time-frequency resource.

23. A communication apparatus, comprising a module or a unit configured to implement the method according to any one of claims 1 to 12, or a module or a unit configured to implement the method according to any one of claims 13 to 22.

24. A communication apparatus, wherein the communication apparatus comprises a processor, the processor is configured to execute instructions stored in a memory, and when the instructions are run on the processor, the communication apparatus is enabled to perform the method according to any one of claims 1 to 12, or the communication apparatus is enabled to implement the method according to any one of claims 13 to 22.

25. A computer-readable storage medium, wherein the computer-readable storage medium stores a computer program, and when the computer program is executed by a computer, the method according to any one of claims 1 to 12 is performed, or the method according to any one of claims 13 to 22 is performed.

26. A computer program product, wherein the computer program product comprises computer instructions, and when the instructions are executed by a computer, the method according to any one of claims 1 to 12 is performed, or the method according to any one of claims 13 to 22 is performed.

N=6    N=5  N=4              N=3              N=2  N=1  N=0

| $T_d$ | $T_{sl}$ | $T_{sl}$ | Busy | $T_d$ | $T_{sl}$ | Busy | $T_d$ | $T_{sl}$ | $T_{sl}$ | $T_{sl}$ | COT |
|---|---|---|---|---|---|---|---|---|---|---|---|

FIG. 1

Interlace 0: RB 0
Interlace 1: RB 1

Interlace 0: RB 10
Interlace 1: RB 11

⋮

Interlace 0: RB 90
Interlace 1: RB 91

RB

FIG. 2

FIG. 3

EP 4 561 166 A1

Trigger resource
selection

Sensing
window

Time-
frequency
resource 3

Time-
frequency
resource 4

Resource selection
window

Time-
frequency
resource 7

Time-
frequency
resource 8

Time-
frequency
resource 2

Time-
frequency
resource 6

Time-
frequency
resource 1

Time-
frequency
resource 5

n

Time domain
(slot)

FIG. 4

FIG. 5

FIG. 6

First terminal device

Second terminal device

S501: First indication information, where the first indication information indicates a first time-frequency resource reserved by the second terminal device

S502: Determine, based on one or both of the following, whether to reserve the first time-frequency resource: a first reference signal received power and a quantity of terminal devices that have reserved the first time-frequency resource

FIG. 7

Trigger resource selection

Resource selection window

LBT procedure

Counter N=0

Time domain

FIG. 8

First terminal device

S701: Determine a first LBT completion time point

S702: Based on the first LBT completion time point, reserve a first time-frequency resource and/or determine whether to perform resource reselection

FIG. 9

Resource selection window

LBT procedure

First time-frequency resource

Second time-frequency resource

Time domain

Counter N=0

FIG. 10

Resource selection window

LBT procedure

First time-frequency
resource

Second time-frequency
resource

Time
domain

Counter
N=0

FIG. 11

Slot 1    Slot 2

Second terminal
device

First access point of the
second terminal device

First terminal
device

First access point of the
first terminal device

FIG. 12

Resource selection window

| 25 μs | Time-frequency resource 1 |

| LBT procedure | Time-frequency resource 2 |

| 25 μs | Time-frequency resource 3 |

Time domain

FIG. 13

Resource selection window

| | Time-frequency resource 1 |

4*9 μs  Remaining LBT duration

| | Time-frequency resource 2 |

| | Time-frequency resource 3 |

Time domain

FIG. 14

Communication apparatus  1300

Interface module  1301

Processing module  1302

FIG. 15

FIG. 16

## INTERNATIONAL SEARCH REPORT

| International application No. |
| --- |
| **PCT/CN2023/104302** |

| A. | CLASSIFICATION OF SUBJECT MATTER |
| --- | --- |

H04W 28/26(2009.01)i

According to International Patent Classification (IPC) or to both national classification and IPC

| B. | FIELDS SEARCHED |
| --- | --- |

Minimum documentation searched (classification system followed by classification symbols)

IPC：H04W H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 边链, 侧链, 旁链, 直连, 预留, 选择, 重选, 资源, 参考信号 接收功率, 完成, 时间, 先听后说, 资源选择窗, sidelink, SL, V2X, resource, select+, reselect+, RSRP, LBT, PSCCH, PSSCH, widow, completion, time

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022061774 A1 (GUANGDONG OPPO MOBILE TELECOMMUNICATIONS CORP., LTD.) 31 March 2022 (2022-03-31) <br> description, pages 2-20, and figures 1-19 | 1-12, 23-26 |
| X | US 2022061095 A1 (QUALCOMM INC.) 24 February 2022 (2022-02-24) <br> description, paragraphs [0031]-[0511], and figures 1-15 | 13-26 |
| X | US 2022070935 A1 (QUALCOMM INC.) 03 March 2022 (2022-03-03) <br> description, paragraphs [0023]-[0226], and figures 1-10 | 13-26 |
| A | CN 114424656 A (GUANGDONG OPPO MOBILE TELECOMMUNICATIONS CORP., LTD.) 29 April 2022 (2022-04-29) <br> entire document | 1-26 |
| A | US 2022070936 A1 (QUALCOMM INC.) 03 March 2022 (2022-03-03) <br> entire document | 1-26 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 September 2023** | **28 September 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/104302**

| Patent document cited in search report | | | Publication date (day/month/year) | Patent family member(s) | | | Publication date (day/month/year) |
|---|---|---|---|---|---|---|---|
| WO | 2022061774 | A1 | 31 March 2022 | US | 2023127136 | A1 | 27 April 2023 |
| | | | | EP | 4161182 | A1 | 05 April 2023 |
| | | | | EP | 4161182 | A4 | 19 July 2023 |
| US | 2022061095 | A1 | 24 February 2022 | WO | 2022039852 | A1 | 24 February 2022 |
| US | 2022070935 | A1 | 03 March 2022 | EP | 4205489 | A1 | 05 July 2023 |
| | | | | WO | 2022047448 | A1 | 03 March 2022 |
| | | | | US | 11737142 | B2 | 22 August 2023 |
| CN | 114424656 | A | 29 April 2022 | WO | 2021134863 | A1 | 08 July 2021 |
| | | | | WO | 2021134283 | A1 | 08 July 2021 |
| US | 2022070936 | A1 | 03 March 2022 | WO | 2022047455 | A1 | 03 March 2022 |
| | | | | EP | 4205493 | A1 | 05 July 2023 |

Form PCT/ISA/210 (patent family annex) (July 2022)

**REFERENCES CITED IN THE DESCRIPTION**

**Patent documents cited in the description**

- CN 202210972032